# EUROPEAN PATENT APPLICATION

(11) **EP 4 804 650 A1**
(43) Date of publication of application: **09.09.2026**
(21) Application number: 23957355.3
(22) Date of filing: 03.11.2023
(51) Int. Cl.: H04W 52/36

(54) **UPLINK COMMUNICATION METHODS, TERMINALS, NETWORK DEVICES, COMMUNICATION SYSTEM, AND STORAGE MEDIUM**

(71) Applicant: Beijing Xiaomi Mobile Software Co., Ltd., Beijing 100085 (CN)
(72) Inventor: GAO, Xueyuan, Beijing 100085 (CN)
(74) Representative: Gunzelmann, Rainer
(86) International application number: PCT/CN2023/129755
(87) International publication number: WO 2025/091499

(57) **Abstract**

The present disclosure provides an uplink communication method, a terminal, a network device, a communication system, and a storage medium. The method includes: sending second information to a network device, where the second information includes a power headroom report (PHR) corresponding to at least one physical uplink shared channel (PUSCH) among a plurality of PUSCHs. The plurality of PUSCHs are based on simultaneous transmission from multi-panel (STxMP), and each PUSCH is associated with a different transmission and reception point (TRP), or each PUSCH is associated with a different transmission configuration indication (TCI) state, or each PUSCH is associated with a different control resource set pool index (CORESETPoolIndex), or each PUSCH is associated with a different sounding reference signal (SRS) resource set. Under the STxMP transmission scheme, by providing PHR reporting manners under different PUSCH transmission conditions and defining a corresponding relation between the PHRs and the PUSCHs, the method of the present disclosure may effectively improve uplink transmission throughput rate and transmission reliability.

## Description

### FIELD

Embodiments of the present disclosure relate to the field of communication technologies, and in particular, to an uplink communication method, a terminal, a network device, a communication system, and a storage medium.

### BACKGROUND

In a new radio (NR) system, in order to improve coverage at a cell edge and provide better service quality within a service area, multi-point coordinated transmission has become an important technical means. It is expected to achieve simultaneous coordinated transmission to multiple transmission and reception points (TRPs) through multiple antenna panels, to enhance transmission reliability and throughput rate.

### SUMMARY

Embodiments of the present disclosure provide an uplink communication method, a terminal, a network device, a communication system, and a storage medium, which may be applied in the field of communication technologies, to solve the technical problem in the related art of "poor uplink transmission throughput rate and transmission reliability under the simultaneous transmission from multi-panel (STxMP) transmission scheme".

According to a first aspect of embodiments of the present disclosure, an uplink communication method is proposed, performed by a terminal, including: sending second information to a network device, where the second information includes a power headroom report (PHR) corresponding to at least one physical uplink shared channel (PUSCH) among a plurality of PUSCHs; in which the plurality of PUSCHs are based on simultaneous transmission from multi-panel (STxMP), and each PUSCH is associated with a different TRP, or each PUSCH is associated with a different transmission configuration indication (TCI) state, or each PUSCH is associated with a different control resource set pool index (CORESETPoolIndex), or each PUSCH is associated with a different sounding reference signal (SRS) resource set.

According to a second aspect of embodiments of the present disclosure, an uplink communication method is proposed, performed by a network device, including: receiving second information sent by a terminal, where the second information includes a PHR corresponding to at least one PUSCH among a plurality of PUSCHs; in which the plurality of PUSCHs are based on STxMP, and each PUSCH is associated with a different TRP, or each PUSCH is associated with a different TCI state, or each PUSCH is associated with a different CORESETPoolIndex, or each PUSCH is associated with a different SRS resource set.

According to a third aspect of embodiments of the present disclosure, an uplink communication method is proposed, including: sending, by a network device, first information to a terminal, where the first information is used for configuring a mode of sending a PHR by the terminal as a multi-PHR mode; and sending, by the terminal, second information to the network device, where the second information includes a PHR corresponding to at least one PUSCH among a plurality of PUSCHs; in which the plurality of PUSCHs are based on STxMP, and each PUSCH is associated with a different TRP, or each PUSCH is associated with a different TCI state, or each PUSCH is associated with a different CORESETPoolIndex, or each PUSCH is associated with a different SRS resource set.

According to a fourth aspect of embodiments of the present disclosure, a terminal is proposed, including: a transceiver unit configured to send second information to a network device, where the second information includes a PHR corresponding to at least one PUSCH among a plurality of PUSCHs; in which the plurality of PUSCHs are based on STxMP, and each PUSCH is associated with a different TRP, or each PUSCH is associated with a different TCI state, or each PUSCH is associated with a different CORESETPoolIndex, or each PUSCH is associated with a different SRS resource set.

According to a fifth aspect of embodiments of the present disclosure, a network device is proposed, including: a transceiver unit configured to receive second information sent by a terminal, where the second information includes a PHR corresponding to at least one PUSCH among a plurality of PUSCHs; in which the plurality of PUSCHs are based on STxMP, and each PUSCH is associated with a different TRP, or each PUSCH is associated with a different TCI state, or each PUSCH is associated with a different CORESETPoolIndex, or each PUSCH is associated with a different SRS resource set.

According to a sixth aspect of embodiments of the present disclosure, a terminal is proposed, including: one or more processors; in which the terminal is configured to perform the uplink communication method according to the first aspect.

According to a seventh aspect of embodiments of the present disclosure, a network device is proposed, including: one or more processors; in which the network device is configured to perform the uplink communication method according to the second aspect.

According to an eighth aspect of embodiments of the present disclosure, a communication system is proposed, including a terminal and a network device, in which the terminal is configured to implement the uplink communication method according to the first aspect, and the network device is configured to implement the uplink communication method according to the second aspect.

According to a ninth aspect of embodiments of the present disclosure, a storage medium is proposed, where the storage medium stores instructions that, when executed by a communication device, cause the communication device to perform the uplink communication method according to the first aspect or the second aspect.

### BRIEF DESCRIPTION OF THE DRAWINGS

In order to more clearly illustrate the technical solutions in embodiments of the present disclosure or the background art, the accompanying drawings required to be used in embodiments of the present disclosure or the background art will be introduced below.
FIG. 1 is a schematic diagram of an architecture of a communication system according to an embodiment of the present disclosure.
FIG. 2A is a schematic diagram of a multi-panel/TRP transmission scenario scheduled based on S-DCI.
FIG. 2B is a schematic diagram of a multi-panel/TRP transmission scenario scheduled based on M-DCI.
FIG. 3 is an interaction schematic diagram of an uplink communication method according to an embodiment of the present disclosure.
FIG. 4A is an interaction schematic diagram of an uplink communication method according to another embodiment of the present disclosure.
FIG. 4B is an interaction schematic diagram of an uplink communication method according to another embodiment of the present disclosure.
FIG. 4C is an interaction schematic diagram of an uplink communication method according to still another embodiment of the present disclosure.
FIG. 4D is an interaction schematic diagram of an uplink communication method according to still another embodiment of the present disclosure.
FIG. 5A is an interaction schematic diagram of an uplink communication method according to still another embodiment of the present disclosure.
FIG. 5B is an interaction schematic diagram of an uplink communication method according to still another embodiment of the present disclosure.
FIG. 5C is an interaction schematic diagram of an uplink communication method according to still another embodiment of the present disclosure.
FIG. 5D is an interaction schematic diagram of an uplink communication method according to still another embodiment of the present disclosure.
FIG. 6 is an interaction schematic diagram of an uplink communication method according to yet another embodiment of the present disclosure.
FIG. 7A shows a schematic diagram of an independent indication mode according to an embodiment of the present disclosure.
FIG. 7B shows a schematic diagram of an independent indication mode according to another embodiment of the present disclosure.
FIG. 7C shows a schematic diagram of a joint indication mode according to another embodiment of the present disclosure.
FIG. 7D shows a schematic diagram of a joint indication mode according to another embodiment of the present disclosure.
FIG. 8A is a schematic block diagram of a terminal proposed by an embodiment of the present disclosure.
FIG. 8B is a schematic block diagram of a network device proposed by an embodiment of the present disclosure.
FIG. 9A is a schematic block diagram of a communication device proposed by an embodiment of the present disclosure.
FIG. 9B is a schematic block diagram of a chip proposed by an embodiment of the present disclosure.

### DETAILED DESCRIPTION

Embodiments of the present disclosure propose an uplink communication method, a terminal, a network device, a communication system, and a storage medium. In some embodiments, terms such as uplink communication method and information processing method and communication method may be interchanged, terms such as uplink communication apparatus, information processing apparatus, and communication apparatus may be interchanged, and terms such as information processing system and communication system may be interchanged.

Embodiments of the present disclosure are not exhaustive, are only illustrations of partial embodiments, and are not intended as specific limitations on the protection scope of the present disclosure. In cases without contradiction, each step in an embodiment may be implemented as an independent embodiment, and the steps may be combined arbitrarily. For example, a solution after removing some steps in an embodiment may also be implemented as an independent embodiment, and the order of steps in an embodiment may be arbitrarily exchanged. Furthermore, optional implementations in an embodiment may be arbitrarily combined. Furthermore, various embodiments may be arbitrarily combined. For example, some or all steps of different embodiments may be arbitrarily combined, and one embodiment may be arbitrarily combined with optional implementations of other embodiments.

In embodiments of the present disclosure, unless otherwise specified and there is a logical conflict, terms and/or descriptions between different embodiments are consistent and may be referenced to each other. Technical features in different embodiments may be combined according to their inherent logical relationships to form new embodiments.

The terms used in embodiments of the present disclosure are only for the purpose of describing specific embodiments and are not intended to limit the present disclosure.

In embodiments of the present disclosure, unless otherwise specified, elements expressed in singular form, such as "a", "an", "the", "above", "said", "aforementioned", "this one", etc., may mean "one and only one" or may mean "one or more", "at least one", etc. For example, when articles such as "a", "an", "the" are used in translation, the noun following the article may be understood as a singular expression or a plural expression.

In embodiments of the present disclosure, "a plurality of" refers to two or more.

In some embodiments, terms such as "at least one of", "at least one of", "one or more", "a plurality of", "multiple" may be interchanged.

Descriptions in embodiments of the present disclosure such as "at least one of A, B, C...", "A and/or B and/or C...", etc., include cases where any one of A, B, C... exists alone, and also include cases where any combination of multiple of A, B, C... exists. Each case may exist alone. For example, "at least one of A, B, C" includes cases of A alone, B alone, C alone, combination of A and B, combination of A and C, combination of B and C, combination of A, B and C. For example, "A and/or B" includes cases of A alone, B alone, combination of A and B.

In some embodiments, statements such as "in case A, in another case B", "in response to case A, in response to another case B" may include the following technical solutions depending on the situation: perform A regardless of B, i.e., in some embodiments A; perform B regardless of A, i.e., in some embodiments B; selectively perform A or B, i.e., in some embodiments, choose to perform A or B; perform both A and B, i.e., in some embodiments A and B. Similar applies when there are more branches such as A, B, C.

Prefix words such as "first", "second" in embodiments of the present disclosure are only used to distinguish different description objects and do not impose restrictions on the position, order, priority, quantity, or content of the description objects. The statement of the description object refers to the claims or the context description in the embodiments, and should not impose additional restrictions due to the use of prefix words. For example, if the description object is "field", then the ordinal numbers before "field" in "first field" and "second field" do not restrict the position or order between the "fields". "First" and "second" do not restrict whether the "fields" they modify are in the same message, nor do they restrict the order of the "first field" and "second field". For another example, if the description object is "level", then the ordinal numbers before "level" in "first level" and "second level" do not restrict the priority between the "levels". For another example, the quantity of description objects is not restricted by the ordinal numbers and may be one or more. For example, with "first apparatus", the quantity of "apparatuses" may be one or more. Furthermore, objects modified by different prefix words may be the same or different. For example, if the description object is "apparatus", then "first apparatus" and "second apparatus" may be the same apparatus or different apparatuses, and their types may be the same or different. For another example, if the description object is "information", then "first information" and "second information" may be the same information or different information, and their content may be the same or different.

In some embodiments, "include A", "contain A", "used for indicating A", "carry A" may be interpreted as directly carrying A, or interpreted as indirectly indicating A.

In some embodiments, terms such as "in response to...", "in response to determining...", "in case of...", "in a case where...", "when...", "provided that...", "if..." may be interchanged.

In some embodiments, terms such as "greater than", "greater than or equal to", "not less than", "more than", "more than or equal to", "not less than", "higher than", "higher than or equal to", "not lower than", "above" may be interchanged, and terms such as "less than", "less than or equal to", "not greater than", "fewer than", "fewer than or equal to", "not more than", "lower than", "lower than or equal to", "not higher than", "below" may be interchanged.

In some embodiments, apparatuses etc. may be interpreted as physical or virtual, and their names are not limited to those recorded in the embodiments. Terms such as "apparatus", "equipment", "device", "circuit", "network element", "node", "function", "unit", "section", "system", "network", "chip", "chip system", "entity", "subject" may be interchanged.

In some embodiments, "network" may be interpreted as a device included in the network (e.g., access network device, core network device, etc.).

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part" may be interchanged.

In some embodiments, terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" may be interchanged.

In some embodiments, obtaining data, information, etc. may comply with the laws and regulations of the country where it is located.

In some embodiments, data, information, etc. may be obtained after obtaining user consent.

Furthermore, each element, each row, or each column in the tables of embodiments of the present disclosure may be implemented as an independent embodiment, and a combination of any elements, any rows, any columns may also be implemented as an independent embodiment.

The correspondences shown in the tables in the present disclosure may be configured or predefined. The values of the information in the tables are only examples, may be configured as other values, and the present disclosure is not limited to this. When configuring the correspondence between configuration information and various parameters, it is not necessary to configure all the correspondences shown in the tables. For example, some correspondences shown in rows in the tables of the present disclosure may not be configured. For another example, appropriate deformation adjustments may be made based on the above tables, such as splitting, merging, etc. The names of the parameters shown in the titles of the above tables may also use other names understandable by communication devices, and the values or representation modes of the parameters may also use other values or representation modes understandable by communication devices. When implemented, the above tables may also use other data structures, such as arrays, queues, containers, stacks, linear tables, pointers, linked lists, trees, graphs, structures, classes, heaps, hash tables, or hash maps.

Predefinition in the present disclosure may be understood as definition, pre-definition, storage, pre-storage, pre-negotiation, pre-configuration, solidification, or pre-programming.

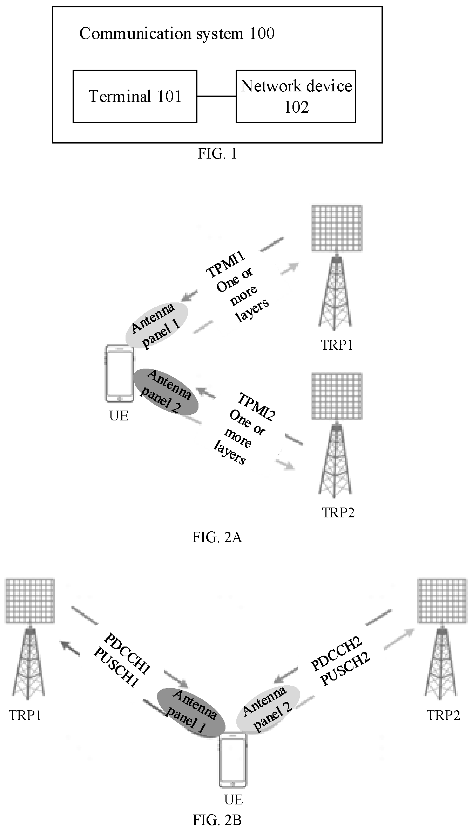

FIG. 1 is a schematic diagram of an architecture of a communication system according to an embodiment of the present disclosure. As shown in FIG. 1, a communication system 100 may include a terminal 101 and a network device 102. The network device 102 may include at least one of an access network device and a core network device.

In some embodiments, the terminal 101 includes, for example, at least one of a mobile phone, a wearable device, an Internet of Things device, a car with communication functionality, a smart car, a tablet computer (Pad), a computer with wireless transceiver functionality, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, but is not limited to this.

In some embodiments, the access network device is, for example, a node or device that connects a terminal to a wireless network. The access network device may include at least one of an evolved NodeB (eNB) in a 5G communication system, a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open RAN (Open RAN), a cloud RAN (Cloud RAN), a base station in other communication systems, an access node in a Wi-Fi system, but is not limited to this.

In some embodiments, the technical solution of the present disclosure may be applicable to an Open RAN architecture. In this case, the interfaces between or within the access network devices involved in embodiments of the present disclosure may become internal interfaces of Open RAN, and the processes and information exchange between these internal interfaces may be implemented through software or programs.

In some embodiments, the access network device may consist of a central unit (CU) and a distributed unit (DU), where the CU may also be called a control unit. Using the CU-DU structure, the protocol layers of the access network device may be split, the functions of some protocol layers are centrally controlled by the CU, and the functions of the part or all of the remaining protocol layers are distributed in the DUs, and the DUs are centrally controlled by the CU, but is not limited to this.

In some embodiments, the core network device may be a single device, including one or more network elements, or may be multiple devices or device groups, each including all or part of one or more network elements. The network elements may be virtual or physical. The core network includes, for example, at least one of Evolved Packet Core (EPC), 5G Core Network (5GCN), Next Generation Core (NGC).

It is understandable that the communication system described in embodiments of the present disclosure is for more clearly illustrating the technical solutions of embodiments of the present disclosure and does not constitute a limitation on the technical solutions proposed in embodiments of the present disclosure. A person of ordinary skill in the art will know that with the evolution of system architecture and the emergence of new business scenarios, the technical solutions proposed in embodiments of the present disclosure are equally applicable to similar technical problems.

The following embodiments of the present disclosure may be applied to the communication system 100 shown in FIG. 1, or some subjects thereof, but are not limited to this. The subjects shown in FIG. 1 are examples. The communication system may include all or some of the subjects in FIG. 1, or may include other subjects not shown in FIG. 1. The quantity and form of each subject are arbitrary. The connection relationships between the subjects are examples. Subjects may not be connected or may be connected, and the connection may be in any manner, may be direct connection or indirect connection, may be wired connection or wireless connection.

Various embodiments of the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G New Radio (NR), Future Radio Access (FRA), New Radio Access Technology (New-RAT), New Radio (NR), New radio access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device-to-Device (D2D) system, Machine to Machine (M2M) system, Internet of Things (IoT) system, Vehicle-to-Everything (V2X), systems using other communication methods, next-generation systems extended based on them, etc. Furthermore, multiple systems may also be combined (e.g., a combination of LTE or LTE-A and 5G, etc.) for application.

Optionally, based on a power headroom report (PHR), a terminal may report the instantaneous transmission power used for sending a physical uplink shared channel (PUSCH) transmission. The PHR reflects the available power of the terminal, i.e., power headroom, which may be measured and reported to the base station in uplink transmission control.

Optionally, the terminal sends the PHR when scheduled to transmit on the uplink shared channel (UL-SCH).

Optionally, the type 1 PHR is mainly relevant to multi-TRP (MTRP) uplink transmission. This PHR includes the power headroom and the maximum configured transmission power (P_{Cmax}) on the component carrier where the PHR is located. P_{Cmax} may be explicitly configured by the network. Since the network knows the coding modulation scheme and the resource size used by the terminal for transmission at the time corresponding to the power headroom report, it may determine the effective combination of the modulation and coding scheme and the allocated resource size. When there is no actual PUSCH transmission, the terminal may also report a type 1 power headroom (PH).

Optionally, the current PHR measurement mechanism is divided into actual PHR or virtual PHR. When there is PUSCH transmission, the terminal reports an actual PHR to the base station. If there is no PUSCH transmission, the terminal calculates a PHR based on a predefined PUSCH format and reports it to the base station as a virtual PHR. The network will determine the bandwidth and transmission mode that the terminal may send based on the power difference information of the terminal.

Optionally, in enhancements of some versions of communication protocols, it is expected to achieve simultaneous coordinated transmission from multiple antenna panels to the TRP directions of multiple base stations, to increase transmission reliability and throughput rate, while effectively reducing transmission delay under multi-TRP. The terminal is required to have the capability of simultaneously sending multiple beams. The transmission of PUSCH may be based on a single physical downlink control channel (PDCCH), i.e., single downlink control information (S-DCI) scheduled multi-panel/TRP transmission, as shown in FIG. 2A, or based on different PDCCHs, i.e., multi-downlink control information (M-DCI) scheduled multi-panel/TRP transmission, as shown in FIG. 2B. FIG. 2A is a schematic diagram of a multi-panel/TRP transmission scenario scheduled based on S-DCI, and FIG. 2B is a schematic diagram of a multi-panel/TRP transmission scenario scheduled based on M-DCI. Optionally, a terminal with multiple panels generally may be configured with multiple physical panels, and the capabilities of different panels may also be different, for example, they have different numbers of sounding reference signal (SRS) ports, and the maximum number of data transmission layers supported by each panel may also differ. For example, one panel supports a maximum of 2 layers of transmission, and another panel supports a maximum of 4 layers of transmission. The network scheduler will determine whether the terminal is currently suitable for simultaneous uplink transmission from multiple panels. If the terminal is currently suitable for simultaneous uplink transmission from multiple panels and is scheduled, the network will directly or indirectly indicate related transmission parameters, including specific beam indication information of the terminal, the number of data layers used for transmission, the allocation of demodulation reference signal (DMRS) ports, and precoding indication information, etc.

Optionally, in uplink multiple-input multiple-output (MIMO) enhancements in some versions of communication protocols, it is considered to achieve simultaneous uplink transmission towards multiple TRPs through the terminal with multiple panels, to further improve the uplink system transmission throughput rate and transmission reliability. For simultaneous uplink transmission from a multi-panel terminal, since each panel of the terminal has an independent power amplifier (PA) implementation structure and may support an independent power control process, the terminal's maximum configured transmission power (P_{Cmax}) may be defined per panel, or the terminal's overall maximum configured transmission power (P_{Cmax}) may be considered simultaneously. In order to support uplink simultaneous transmission from multi-panel (STxMP), PHR reporting may be enhanced.

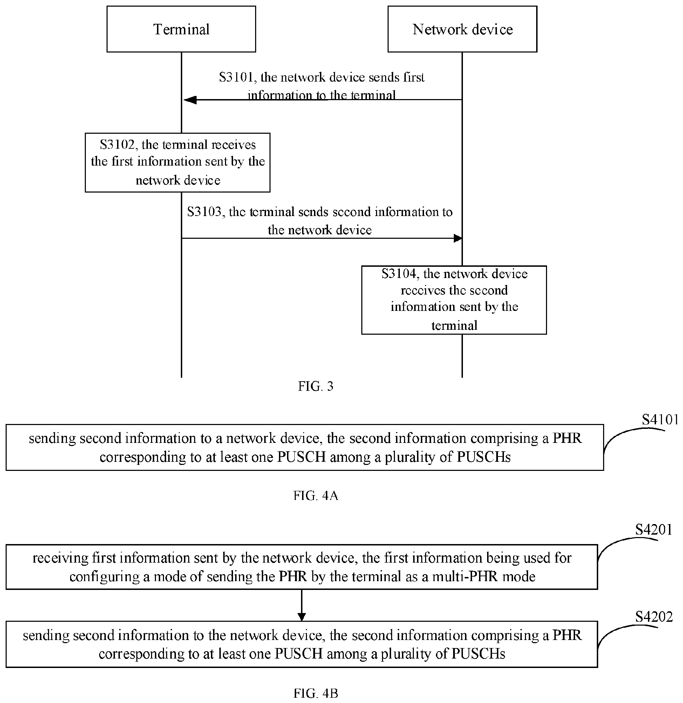

FIG. 3 is an interaction schematic diagram of an uplink communication method according to an embodiment of the present disclosure. As shown in FIG. 3, an embodiment of the present disclosure relates to an uplink communication method, which may be used for the communication system 100. The method includes:
Step S3101: The network device sends first information to the terminal.

The first information is used for configuring a mode of sending a power headroom report (PHR) by the terminal as a multi-PHR mode.

In some embodiments, the network device may configure, via higher layer signaling, the mode of sending the PHR by the terminal as the multi-PHR mode.

In some embodiments, the multi-PHR mode may be, for example, twoPHRMode. In the multi-PHR mode, the terminal may report at least two PHRs.

Step S3102: The terminal receives the first information sent by the network device.

In some embodiments, the terminal may receive the first information sent by the network device, and determine the content configured by the network device for the terminal based on the first information, to support PHR reporting.

Step S3103: The terminal sends second information to the network device.

The second information includes a PHR corresponding to at least one PUSCH among a plurality of PUSCHs.

The plurality of PUSCHs are based on simultaneous transmission from multi-panel (STxMP). Each PUSCH is associated with a different TRP, or each PUSCH is associated with a different transmission configuration indication state (TCI state), or each PUSCH is associated with a different control resource set pool index (CORESETPoolIndex), or each PUSCH is associated with a different SRS resource set.

For example, among the plurality of PUSCHs, PUSCH1 is associated with TRP1, PUSCH2 is associated with TRP2, PUSCH3 is associated with TRP3, and so on. Alternatively, PUSCH1 is associated with TCI state 1, PUSCH2 is associated with TCI state 2, PUSCH3 is associated with TCI state 3, and so on. Alternatively, PUSCH1 is associated with CORESETPoolIndex1, PUSCH2 is associated with CORESETPoolIndex2, PUSCH3 is associated with CORESETPoolIndex3, and so on. Alternatively, PUSCH1 is associated with SRS resource set 1, PUSCH2 is associated with SRS resource set 2, PUSCH3 is associated with SRS resource set 3, and so on.

Optionally, different PUSCH transmissions may support scheduled dynamic grant (DG) PUSCH transmission, or may support grant-free configured grant (CG) PUSCH transmission, which is not limited in the present disclosure.

In some embodiments of the present disclosure, the terminal may determine, based on a protocol agreement or third information sent by the network device, a reporting manner of the PHR corresponding to the at least one PUSCH, where the reporting manner may be separate reporting or joint reporting.

It is understandable that it is more reasonable for the protocol agreement to support only separate reporting, i.e., the reporting manner of the PHR corresponding to the at least one PUSCH indicated by the protocol agreement is only separate reporting. The reporting manner of the PHR corresponding to the at least one PUSCH indicated by the third information sent by the network device may be separate reporting or joint reporting, which is not limited in the present disclosure.

In some embodiments of the present disclosure, the third information may be at least one of radio resource control (RRC) signaling, DCI 0_1 signaling, DCI 0_2 signaling, or DCI 0_3 signaling.

For example, when PUSCHs based on M-DCI for STxMP transmission are used and the network simultaneously configures the multi-PHR mode (such as twoPHRMode) via higher layer signaling, different PUSCH transmissions (supporting scheduled DG PUSCH transmission and grant-free CG PUSCH transmission) need to be associated with different SRS resource sets/CORESETPoolIndexes, and the "separate" or "joint" PHR reporting manner is configured via predefined or higher layer signaling.

In some embodiments, in response to the reporting manner of the PHR corresponding to the at least one PUSCH being separate reporting, the second information is reported in a respective medium access control control element (MAC CE) for each PUSCH among the plurality of PUSCHs configured based on STxMP.

For example, for the case where the reporting manner of the PHR corresponding to the at least one PUSCH is separate reporting (i.e., PHRs for PUSCHs sent by different panels are separately reported), each PUSCH reports its corresponding PHR via its own MAC CE, the same as the existing single TRP (STRP).

In some embodiments, in response to the reporting manner of the PHR corresponding to the at least one PUSCH being joint reporting, the terminal may perform PHR measurement on the plurality of PUSCHs to obtain the PHR corresponding to each PUSCH; and report the second information to the network device by sending one PHR MAC CE, where the second information includes the PHR corresponding to the at least one PUSCH among the plurality of PUSCHs.

Here, the one PHR MAC CE sent refers to the MAC CE used to report the PHR corresponding to the at least one PUSCH among the plurality of PUSCHs included in the second information, and the PUSCH carrying the PHR MAC CE is not any one of the aforementioned plurality of PUSCHs.

Since, in the case of joint reporting, the PHRs corresponding to the at least one PUSCH among the plurality of PUSCHs may be reported to the network device by sending one PHR MAC CE, uplink transmission throughput rate and transmission reliability may be effectively improved.

In some embodiments, in response to the reporting manner of the PHR corresponding to the at least one PUSCH being joint reporting, in a case where each PUSCH among the plurality of PUSCHs is actually transmitted on a slot overlapping with a slot n, where the slot n is a first slot of a PUSCH carrying the second information, and the slot n serves as a slot for reporting the PHR, the second information may include the PHR corresponding to each PUSCH, and each PHR is an actual PHR and includes a power headroom (PH) and a configured maximum output power P_{Cmax} on a component carrier where the PHR is located, where the PHR is determined based on a corresponding actually transmitted PUSCH.

That is, in the case of joint reporting, if each PUSCH among the plurality of PUSCHs is actually transmitted on the slot overlapping with the slot n, it means that the transmission of each PUSCH among the plurality of PUSCHs is an actual transmission. In this case, when the terminal reports the second information to the network device by sending one PHR MAC CE, the second information may include the PHR corresponding to each PUSCH, each PHR is an actual PHR and includes a PH and a P_{Cmax}, and each PHR is determined based on a corresponding actually transmitted PUSCH.

In some embodiments, for the above case where the second information includes the PHR corresponding to each PUSCH among the plurality of PUSCHs, and each PHR is an actual PHR, since the second information includes the PHR corresponding to each PUSCH among the plurality of PUSCHs, it is necessary to indicate the correspondence between the PHRs and the PUSCHs in the second information to determine which PUSCH's PHR each PHR is. Optionally, the first PHR included in the second information may be the PHR of the PUSCH corresponding to the first TCI state, and the second PHR included in the second information may be the PHR of the PUSCH corresponding to the second TCI state; or the first PHR included in the second information may be the PHR of the PUSCH corresponding to the first CORESETPoolIndex, and the second PHR included in the second information may be the PHR of the PUSCH corresponding to the second CORESETPoolIndex; or the first PHR included in the second information may be the PHR of the PUSCH corresponding to the first SRS resource set, and the second PHR included in the second information may be the PHR of the PUSCH corresponding to the second SRS resource set, where an index of the first SRS resource set is smaller than an index of the second SRS resource set.

For example, for the case where the reporting manner of the PHR corresponding to the at least one PUSCH is joint reporting (i.e., PHRs for PUSCHs sent by different panels are jointly reported), if different PUSCHs corresponding to different panels/TCI states/CORESETPoolIndexes/SRS resource sets have overlapping time domain transmissions on the slot overlapping with the first slot of the PUSCH carrying the PHR MAC CE, i.e., slot n, then each PUSCH transmission is an actual transmission. In this case, the PHR corresponding to each PUSCH (actual PHR + actual PHR) may be simultaneously reported via the second information. Each PHR includes a PH and a P_{Cmax}, and each PHR is determined based on a corresponding actually transmitted PUSCH. For example, the P_{Cmax}, ₖ and the PH are reported per panel, k={0,1}, where the P_{Cmax}, ₖ is a P_{Cmax} corresponding to a different TCI state. It is further necessary to define the correspondence between the reported PHRs and the PUSCHs, as follows:
Option 1: The first PHR included in the second information corresponds to the PUSCH transmission associated with CORESETPoolIndex#0, and the second PHR included in the second information corresponds to the PUSCH transmission associated with CORESETPoolIndex#1.
Option 2: The first PHR included in the second information corresponds to the PUSCH transmission associated with the SRS resource set with a smaller index, and the second PHR included in the second information corresponds to the PUSCH transmission associated with the SRS resource set with a larger index.

In summary, when the reporting manner is joint reporting and the transmission of each PUSCH among the plurality of PUSCHs is an actual transmission, the second information may simultaneously report the PHR corresponding to each actually transmitted PUSCH among the plurality of PUSCHs (actual PHR + actual PHR), improving uplink transmission throughput rate and transmission reliability.

In some embodiments, in response to the reporting manner of the PHR corresponding to the at least one PUSCH being joint reporting, in a case where a first PUSCH among the plurality of PUSCHs is actually transmitted on a slot overlapping with a slot n, a second PUSCH among the plurality of PUSCHs is not transmitted on the slot overlapping with the slot n, where the slot n is a first slot of a PUSCH carrying the second information, and the slot n serves as a slot for reporting the PHR, the second information may include the PHR corresponding to the first PUSCH and the PHR corresponding to the second PUSCH, the PHR corresponding to the first PUSCH is an actual PHR, the PHR corresponding to the second PUSCH is a virtual PHR, each PHR includes a PH and a P_{Cmax} on a component carrier where the PHR is located, where the PHR corresponding to the first PUSCH is determined based on a corresponding actually transmitted PUSCH, and the PHR corresponding to the second PUSCH is determined based on a corresponding reference PUSCH.

In some embodiments, in response to the reporting manner of the PHR corresponding to the at least one PUSCH being joint reporting, in a case where a first PUSCH among the plurality of PUSCHs is actually transmitted on a slot overlapping with a slot n, a second PUSCH among the plurality of PUSCHs is not transmitted on the slot overlapping with the slot n, where the slot n is a first slot of a PUSCH carrying the second information, and the slot n serves as a slot for reporting the PHR, the second information may include the PHR corresponding to the first PUSCH and the PHR corresponding to the second PUSCH, the PHR corresponding to the first PUSCH is an actual PHR, the PHR corresponding to the second PUSCH is a virtual PHR, the PHR corresponding to the first PUSCH includes a PH and a P_{Cmax} on a component carrier where the PHR is located, and the PHR corresponding to the second PUSCH includes a PH, where the PHR corresponding to the first PUSCH is determined based on a corresponding actually transmitted PUSCH, and the PHR corresponding to the second PUSCH is determined based on a corresponding reference PUSCH.

In some embodiments, in response to the reporting manner of the PHR corresponding to the at least one PUSCH being joint reporting, in a case where a first PUSCH among the plurality of PUSCHs is actually transmitted on a slot overlapping with a slot n, a second PUSCH among the plurality of PUSCHs is not transmitted on the slot overlapping with the slot n, where the slot n is a first slot of a PUSCH carrying the second information, and the slot n serves as a slot for reporting the PHR, the second information may include the PHR corresponding to the first PUSCH, the PHR is an actual PHR and includes a PH and a P_{Cmax} on a component carrier where the PHR is located, where the PHR is determined based on a corresponding actually transmitted PUSCH.

That is, in the case of joint reporting, if the first PUSCH among the plurality of PUSCHs is actually transmitted on the slot overlapping with the slot n, and the second PUSCH among the plurality of PUSCHs is not transmitted on the slot overlapping with the slot n, it means that the transmission of the first PUSCH among the plurality of PUSCHs is an actual transmission, and the transmission of the second PUSCH among the plurality of PUSCHs is a virtual transmission. In this case, when the terminal reports the second information to the network device by sending one PHR MAC CE, the second information may include the PHR corresponding to the first PUSCH and the PHR corresponding to the second PUSCH. The PHR corresponding to the first PUSCH is an actual PHR, and the PHR corresponding to the second PUSCH is a virtual PHR. The PHR corresponding to the first PUSCH is determined based on a corresponding actually transmitted PUSCH, and the PHR corresponding to the second PUSCH is determined based on a corresponding reference PUSCH. Furthermore, the PHR corresponding to the first PUSCH may include a PH and a P_{Cmax}, and the PHR corresponding to the second PUSCH may include a PH and a P_{Cmax}, or the PHR corresponding to the second PUSCH may include only PH. Alternatively, the second information may include only the PHR corresponding to the first PUSCH, where the PHR corresponding to the first PUSCH is an actual PHR and includes a PH and a P_{Cmax}, and the PHR corresponding to the first PUSCH is determined based on a corresponding actually transmitted PUSCH.

It should be noted that, for the above case where the first PUSCH among the plurality of PUSCHs is actually transmitted on the slot overlapping with the slot n, and the second PUSCH among the plurality of PUSCHs is not transmitted on the slot overlapping with the slot n, it is not limited whether the second PUSCH among the plurality of PUSCHs is actually transmitted on other slots.

In some embodiments, for the above case where the second information includes the PHR corresponding to the first PUSCH and the PHR corresponding to the second PUSCH, since the second information includes multiple PHRs, and these multiple PHRs are the PHR corresponding to the first PUSCH and the PHR corresponding to the second PUSCH, it is necessary to indicate the correspondence between the PHRs and the PUSCHs in the second information to determine which PUSCH's PHR each PHR is. Optionally, the first PHR included in the second information is the PHR of the PUSCH corresponding to the first TCI state, and the second PHR included in the second information is the PHR of the PUSCH corresponding to the second TCI state; or the first PHR included in the second information is the PHR of the PUSCH corresponding to the first CORESETPoolIndex, and the second PHR included in the second information is the PHR of the PUSCH corresponding to the second CORESETPoolIndex; or the first PHR included in the second information is the PHR of the PUSCH corresponding to the first SRS resource set, and the second PHR included in the second information is the PHR of the PUSCH corresponding to the second SRS resource set, where an index of the first SRS resource set is smaller than an index of the second SRS resource set; or the first PHR included in the second information is the PHR corresponding to the first PUSCH, and the second PHR included in the second information is the PHR corresponding to the second PUSCH.

For example, for the case where the reporting manner of the PHR corresponding to the at least one PUSCH is joint reporting (i.e., PHRs for PUSCHs sent by different panels are jointly reported), if different PUSCHs corresponding to different panels/TCI states/CORESETPoolIndexes/SRS resource sets only have partial actual transmission on slot n, and the rest are virtual transmissions, then the PHR corresponding to each PUSCH (actual PHR + virtual PHR) may be simultaneously reported via the second information, or only the PHR corresponding to the actually transmitted PUSCH (actual PHR) may be reported. Optionally, when the second information simultaneously reports the PHR corresponding to each PUSCH, the second information includes the PHR corresponding to the first PUSCH and the PHR corresponding to the second PUSCH. The transmission of the first PUSCH is actual transmission, and the transmission of the second PUSCH is virtual transmission. The PHR corresponding to the first PUSCH is an actual PHR, and includes a PH and a P_{Cmax}. The PHR corresponding to the second PUSCH is a virtual PHR, and includes a PH and a P_{Cmax} or only PH. When the second information reports only the PHR corresponding to the actually transmitted PUSCH, the second information includes only the PHR corresponding to the first PUSCH. The transmission of the first PUSCH is actual transmission, and the PHR corresponding to the first PUSCH is an actual PHR and includes a PH and a P_{Cmax}. It is further necessary to define the correspondence between the reported PHRs and the PUSCHs, as follows:
Option 1: The first PHR included in the second information corresponds to the PUSCH transmission associated with CORESETPoolIndex#0, and the second PHR included in the second information corresponds to the PUSCH transmission associated with CORESETPoolIndex#1.
Option 2: The first PHR included in the second information corresponds to the PUSCH transmission associated with the SRS resource set with a smaller index, and the second PHR included in the second information corresponds to the PUSCH transmission associated with the SRS resource set with a larger index.
Option 3: The first PHR included in the second information corresponds to the PUSCH transmission associated with the actual PUSCH, and the second PHR included in the second information corresponds to the PUSCH transmission associated with the virtual PUSCH.

In summary, when the reporting manner is joint reporting, the transmission of the first PUSCH among the plurality of PUSCHs is an actual transmission, and the transmission of the second PUSCH is a virtual transmission, the second information may simultaneously report the PHR corresponding to the actually transmitted first PUSCH and the PHR corresponding to the virtually transmitted second PUSCH (actual PHR + virtual PHR), or report only the PHR corresponding to the actually transmitted first PUSCH (actual PHR), improving uplink transmission throughput rate and transmission reliability.

In some embodiments, in response to the reporting manner of the PHR corresponding to the at least one PUSCH being joint reporting, in a case where each PUSCH among the plurality of PUSCHs is not transmitted on a slot overlapping with a slot n, where the slot n is a first slot of a PUSCH carrying the second information, and the slot n serves as a slot for reporting the PHR, the second information may include the PHR corresponding to each PUSCH, each PHR is a virtual PHR, and each PHR includes a PH, or each PHR includes a PH and a P_{Cmax} on a component carrier where the PHR is located, where the PHR is determined based on a corresponding reference PUSCH.

In some embodiments, for the above case where the second information includes the PHR corresponding to each PUSCH, and each PHR is a virtual PHR, since the second information includes the PHR corresponding to each PUSCH, it is necessary to indicate the correspondence between the PHRs and the PUSCHs in the second information to determine which PUSCH's PHR each PHR is. Optionally, the first PHR included in the second information is the PHR of the PUSCH corresponding to the first TCI state, and the second PHR included in the second information is the PHR of the PUSCH corresponding to the second TCI state; or the first PHR included in the second information is the PHR of the PUSCH corresponding to the first CORESETPoolIndex, and the second PHR included in the second information is the PHR of the PUSCH corresponding to the second CORESETPoolIndex; or the first PHR included in the second information is the PHR of the PUSCH corresponding to the first SRS resource set, and the second PHR included in the second information is the PHR of the PUSCH corresponding to the second SRS resource set, where an index of the first SRS resource set is smaller than an index of the second SRS resource set.

In some embodiments, in response to the reporting manner of the PHR corresponding to the at least one PUSCH being joint reporting, in a case where each PUSCH among the plurality of PUSCHs is not transmitted on a slot overlapping with a slot n, where the slot n is a first slot of a PUSCH carrying the second information, and the slot n serves as a slot for reporting the PHR, the second information may include one PHR, the PHR is a virtual PHR, the PHR includes a PH, or the PHR includes a PH and a P_{Cmax} on a component carrier where the PHR is located, where the PHR is determined based on a corresponding reference PUSCH; where the PHR is a PHR of a PUSCH corresponding to a first TCI state, or the PHR is a PHR of a PUSCH corresponding to a first CORESETPoolIndex, or the PHR is a PHR of a PUSCH corresponding to an SRS resource set with a smaller index among two SRS resource sets.

That is, in the case of joint reporting, if each PUSCH among the plurality of PUSCHs is not transmitted on the slot overlapping with the slot n, it means that the transmission of each PUSCH among the plurality of PUSCHs is a virtual transmission. In this case, when the terminal reports the second information to the network device by sending one PHR MAC CE, the second information may include the PHR corresponding to each PUSCH. Each PHR is a virtual PHR. Each PHR includes a PH, or each PHR includes a PH and a P_{Cmax} on a component carrier where the PHR is located. Furthermore, each PHR is determined based on a corresponding reference PUSCH. Additionally, since the second information includes the PHR corresponding to each PUSCH, it is also necessary to indicate the correspondence between the PHRs and the PUSCHs in the second information. Alternatively, the second information may include one PHR. This PHR is a virtual PHR, and includes a PH, or includes a PH and a P_{Cmax} on a component carrier where the PHR is located. Furthermore, this PHR is determined based on a corresponding reference PUSCH. Optionally, this PHR may be the PHR of the PUSCH corresponding to the first TCI state, or this PHR may be the PHR of the PUSCH corresponding to the first CORESETPoolIndex, or this PHR may be the PHR of the PUSCH corresponding to the SRS resource set with the smaller index among the two SRS resource sets.

It should be noted that, for the above case where each PUSCH among the plurality of PUSCHs is not transmitted on the slot overlapping with the slot n, the present disclosure does not limit whether the second PUSCH among the plurality of PUSCHs is actually transmitted on other slots.

For example, for the case where the reporting manner of the PHR corresponding to the at least one PUSCH is joint reporting (i.e., PHRs for PUSCHs sent by different panels are jointly reported), if different PUSCHs corresponding to different panels/TCI states/CORESETPoolIndexes/SRS resource sets have no actual PUSCH transmission on slot n, then the second information may simultaneously report the PHR corresponding to each PUSCH (virtual PHR + virtual PHR), or report only one PHR (virtual PHR). Optionally, when the second information simultaneously reports the PHR corresponding to each PUSCH, the second information includes the PHR corresponding to each PUSCH. Each PHR is a virtual PHR. Each PHR includes a PH, or each PHR includes a PH and P_{Cmax}. Furthermore, each PHR is determined based on a corresponding reference PUSCH. It is further necessary to define the correspondence between the reported PHRs and the PUSCHs, as follows:
Option 1: The first PHR included in the second information corresponds to the PUSCH transmission associated with CORESETPoolIndex#0, and the second PHR included in the second information corresponds to the PUSCH transmission associated with CORESETPoolIndex#1.
Option 2: The first PHR included in the second information corresponds to the PUSCH transmission associated with the SRS resource set with a smaller index, and the second PHR included in the second information corresponds to the PUSCH transmission associated with the SRS resource set with a larger index.

When the second information reports only one PHR, the second information includes one PHR. This PHR is a virtual PHR, and includes a PH, or includes a PH and a P_{Cmax}. Furthermore, this PHR is determined based on a corresponding reference PUSCH, and this PHR may be the PHR of the PUSCH corresponding to the first TCI state, or this PHR may be the PHR of the PUSCH corresponding to the first CORESETPoolIndex, or this PHR may be the PHR of the PUSCH corresponding to the SRS resource set with the smaller index among the two SRS resource sets.

In summary, when the reporting manner is joint reporting and the transmission of each PUSCH among the plurality of PUSCHs is a virtual transmission, the second information may simultaneously report the PHR corresponding to each virtually transmitted PUSCH among the plurality of PUSCHs (virtual PHR + virtual PHR), or report only the PHR corresponding to one virtually transmitted PUSCH (virtual PHR), improving uplink transmission throughput rate and transmission reliability.

In some embodiments of the present disclosure, the terminal may also send fourth information to the network device, where the fourth information indicates that the terminal has a terminal capability of supporting PHR enhanced calculation. Thus, it may be accurately indicated to the network device whether the terminal has the capability of supporting PHR enhanced calculation.

In some embodiments of the present disclosure, the network device may receive the fourth information. For example, if the network device receives the fourth information, it indicates that the terminal has the terminal capability of supporting PHR enhanced calculation.

In some embodiments of the present disclosure, the fourth information may be at least one of RRC signaling, DCI 0_1 signaling, DCI 0_2 signaling, or DCI 0_3 signaling, to effectively improve the flexibility of terminal capability indication.

Optionally, the PHR enhanced calculation includes: a first PUSCH among the plurality of PUSCHs is actually transmitted on a slot overlapping with a slot n, a second PUSCH among the plurality of PUSCHs is not transmitted on the slot overlapping with the slot n, where the slot n is a first slot of a PUSCH carrying the second information, and the slot n serves as a slot for reporting the PHR; and a PH and a P_{Cmax} on a component carrier where the PHR is located, in the PHR corresponding to the second PUSCH, are determined based on at least part of transmission parameters of the first PUSCH and/or by taking into account a non-ideal maximum power reduction (MPR) parameter corresponding to the second PUSCH. Here, the at least part of transmission parameters of the first PUSCH are actually transmitted transmission parameters.

That is, in a case where the first PUSCH among the plurality of PUSCHs is actually transmitted on the slot overlapping with the slot n, and the second PUSCH among the plurality of PUSCHs is not transmitted on the slot overlapping with the slot n, where the slot n is the first slot of the PUSCH carrying the second information, and the slot n serves as the slot for reporting the PHR, the a PH and a P_{Cmax} in the PHR corresponding to the second PUSCH are determined based on at least part of transmission parameters of the first PUSCH that is actually transmitted among the plurality of PUSCHs and/or by taking into account the non-ideal MPR parameter corresponding to the second PUSCH that is virtually transmitted among the plurality of PUSCHs.

Optionally, the PHR enhanced calculation includes: each PUSCH among the plurality of PUSCHs is not transmitted on a slot overlapping with a slot n, where the slot n is a first slot of a PUSCH carrying the second information, and the slot n serves as a slot for reporting the PHR; and a PH and a P_{Cmax} on a component carrier where the PHR is located, in the PHR corresponding to each PUSCH, are determined based on at least part of transmission parameters of any one PUSCH among the plurality of PUSCHs and/or by taking into account a non-ideal MPR parameter corresponding to the any one PUSCH. Here, the at least part of transmission parameters of the any one PUSCH among the plurality of PUSCHs are reference values, not actually transmitted transmission parameters.

That is, in a case where each PUSCH among the plurality of PUSCHs is not transmitted on the slot overlapping with the slot n, where the slot n is the first slot of the PUSCH carrying the second information, and the slot n serves as the slot for reporting the PHR, the PH and P_{Cmax} in the PHR corresponding to each PUSCH are determined based on at least part of transmission parameters of any one PUSCH among the plurality of PUSCHs and/or by taking into account the non-ideal MPR parameter corresponding to the aforementioned any one PUSCH. In this case, since the transmission of each PUSCH among the plurality of PUSCHs is a virtual transmission, the at least part of transmission parameters of any one PUSCH among the plurality of PUSCHs are reference values, not actually transmitted transmission parameters.

Thus, the accuracy of PHR calculation may be effectively improved, the network device may obtain an accurate PHR, the effect of PHR reporting may be improved, and the network device may be supported in obtaining more meaningful PHR information.

Step S3104: The network device receives the second information sent by the terminal.

In some embodiments, the network device may receive the second information sent by the terminal. For example, it obtains the PHRs corresponding to different PUSCH transmissions carried in the MAC CE in the second information.

The uplink communication method according to embodiments of the present disclosure may include at least one of steps S3101 to S3104. For example, in some embodiments, steps S3101 and S3102 may be independent embodiments, and steps S3103 and S3104 may also be independent embodiments. That is, after the network device sends the first information, the terminal may always use these configuration information in subsequent measurement reporting until the network device sends new first information again to update the configuration of the PUSCH sending PHR mode. For another example, in some embodiments, step S3101 may be implemented as an independent embodiment, step S3102 may be implemented as an independent embodiment, and so on, but is not limited to this. Steps S3101+S3102 may be implemented as an independent embodiment, steps S3101+S3102+S3103 may be implemented as an independent embodiment, but is not limited to this.

In this implementation or embodiment, in cases without contradiction, each step may be independent, arbitrarily combined, or the order may be exchanged. Optional modes or optional examples may be arbitrarily combined, and may be arbitrarily combined with any steps of other implementations or other embodiments.

Thus, in this embodiment, the network device sends first information to the terminal, where the first information is used for configuring the mode of sending the power headroom report (PHR) by the terminal as the multi-PHR mode. The terminal receives the first information sent by the network device. The terminal sends second information to the network device, where the second information includes a PHR corresponding to at least one physical uplink shared channel (PUSCH) among a plurality of PUSCHs. The network device receives the second information sent by the terminal. Thus, under the simultaneous transmission from multi-panel (STxMP) transmission scheme, by providing PHR reporting manners under different PUSCH transmission conditions and defining the correspondence between PHRs and PUSCHs, the uplink transmission throughput rate and transmission reliability may be effectively improved. At the same time, introducing a PHR enhanced calculation scheme enables the network device to obtain a relatively accurate PHR, improving the effect of PHR reporting.

FIG. 4A is an interaction schematic diagram of an uplink communication method according to another embodiment of the present disclosure. As shown in FIG. 4A, an embodiment of the present disclosure relates to an uplink communication method, which may be performed by a terminal. The method includes:
Step S4101: Second information is sent to a network device, where the second information includes a PHR corresponding to at least one PUSCH among a plurality of PUSCHs.

Before sending the second information to the network device, the terminal needs to determine the PHR mode. The determination method is based on receiving first information sent by the network device, or may be determined based on a protocol agreement. In this embodiment, the PHR mode determined by the terminal is the multi-PHR mode.

The plurality of PUSCHs are based on STxMP. Each PUSCH is associated with a different TRP, or each PUSCH is associated with a different TCI state, or each PUSCH is associated with a different CORESETPoolIndex, or each PUSCH is associated with a different SRS resource set.

In some embodiments, the plurality of PUSCHs are transmitted based on multi-DCI.

The reporting method according to embodiments of the present disclosure may include step S4101. For example, step S4101 may be implemented as an independent embodiment, but is not limited to this.

In this implementation or embodiment, in cases without contradiction, each step may be independent, arbitrarily combined, or the order may be exchanged. Optional modes or optional examples may be arbitrarily combined, and may be arbitrarily combined with any steps of other implementations or other embodiments.

FIG. 4B is an interaction schematic diagram of an uplink communication method according to another embodiment of the present disclosure. As shown in FIG. 4B, an embodiment of the present disclosure relates to an uplink communication method, which may be performed by a terminal. The method includes:
Step S4201: First information sent by a network device is received, where the first information is used for configuring a mode of sending a PHR by the terminal as a multi-PHR mode.
Step S4202: Second information is sent to the network device, where the second information includes a PHR corresponding to at least one PUSCH among a plurality of PUSCHs.

The plurality of PUSCHs are based on STxMP. Each PUSCH is associated with a different TRP, or each PUSCH is associated with a different TCI state, or each PUSCH is associated with a different CORESETPoolIndex, or each PUSCH is associated with a different SRS resource set.

In some embodiments, the plurality of PUSCHs are transmitted based on multi-DCI.

The uplink communication method according to embodiments of the present disclosure may include at least one of steps S4201 to S4202. For example, step S4201 may be implemented as an independent embodiment, step S4202 may be implemented as an independent embodiment, and so on, but is not limited to this. Steps S4201+S4202 may be implemented as an independent embodiment, but is not limited to this.

In this implementation or embodiment, in cases without contradiction, each step may be independent, arbitrarily combined, or the order may be exchanged. Optional modes or optional examples may be arbitrarily combined, and may be arbitrarily combined with any steps of other implementations or other embodiments.

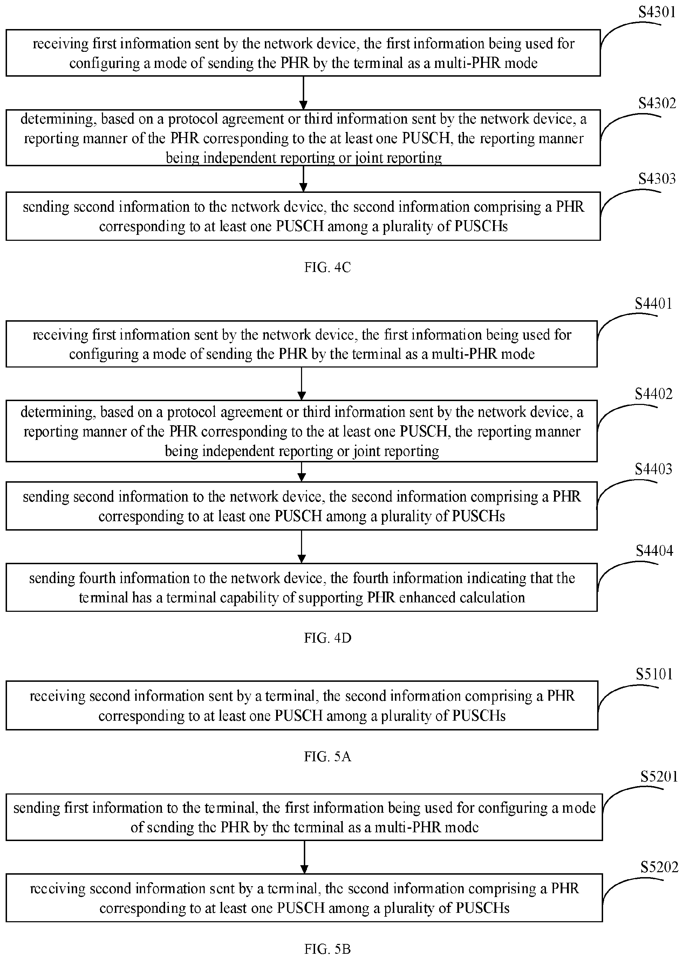

FIG. 4C is an interaction schematic diagram of an uplink communication method according to another embodiment of the present disclosure. As shown in FIG. 4C, an embodiment of the present disclosure relates to an uplink communication method, which may be performed by a terminal. The method includes:
Step S4301: First information sent by a network device is received, where the first information is used for configuring a mode of sending a PHR by the terminal as a multi-PHR mode.
Step S4302: A reporting manner of the PHR corresponding to the at least one PUSCH is determined based on a protocol agreement or third information sent by the network device, where the reporting manner is separate reporting or joint reporting.
Step S4303: Second information is sent to the network device, where the second information includes a PHR corresponding to at least one PUSCH among a plurality of PUSCHs.

The plurality of PUSCHs are based on STxMP. Each PUSCH is associated with a different TRP, or each PUSCH is associated with a different TCI state, or each PUSCH is associated with a different CORESETPoolIndex, or each PUSCH is associated with a different SRS resource set.

In some embodiments, the plurality of PUSCHs are transmitted based on multi-DCI.

The uplink communication method according to embodiments of the present disclosure may include at least one of steps S4301 to S4303. For example, step S4301 may be implemented as an independent embodiment, step S4302 may be implemented as an independent embodiment, and so on, but is not limited to this. Steps S4301+S4302 may be implemented as an independent embodiment, but is not limited to this.

In this implementation or embodiment, in cases without contradiction, each step may be independent, arbitrarily combined, or the order may be exchanged. Optional modes or optional examples may be arbitrarily combined, and may be arbitrarily combined with any steps of other implementations or other embodiments.

FIG. 4D is an interaction schematic diagram of an uplink communication method according to still another embodiment of the present disclosure. As shown in FIG. 4D, an embodiment of the present disclosure relates to an uplink communication method, which may be performed by a terminal. The method includes:
Step S4401: First information sent by a network device is received, where the first information is used for configuring a mode of sending a PHR by the terminal as a multi-PHR mode.
Step S4402: A reporting manner of the PHR corresponding to the at least one PUSCH is determined based on a protocol agreement or third information sent by the network device, where the reporting manner is separate reporting or joint reporting.
Step S4403: Second information is sent to the network device, where the second information includes a PHR corresponding to at least one PUSCH among a plurality of PUSCHs.

The plurality of PUSCHs are based on STxMP. Each PUSCH is associated with a different TRP, or each PUSCH is associated with a different TCI state, or each PUSCH is associated with a different CORESETPoolIndex, or each PUSCH is associated with a different SRS resource set.

In some embodiments, the plurality of PUSCHs are transmitted based on multi-DCI.

Step S4404: Fourth information is sent to the network device, where the fourth information indicates that the terminal has a terminal capability of supporting PHR enhanced calculation.

The uplink communication method according to embodiments of the present disclosure may include at least one of steps S4401 to S4404. For example, step S4401 may be implemented as an independent embodiment, step S4402 may be implemented as an independent embodiment, and so on, but is not limited to this. Steps S4401+S4404 may be implemented as an independent embodiment, but is not limited to this.

In this implementation or embodiment, in cases without contradiction, each step may be independent, arbitrarily combined, or the order may be exchanged. Optional modes or optional examples may be arbitrarily combined, and may be arbitrarily combined with any steps of other implementations or other embodiments.

FIG. 5A is an interaction schematic diagram of an uplink communication method according to another embodiment of the present disclosure. As shown in FIG. 5A, an embodiment of the present disclosure relates to an uplink communication method, which may be performed by a network device. The method includes:
Step S5101: Second information sent by a terminal is received, where the second information includes a PHR corresponding to at least one PUSCH among a plurality of PUSCHs.

The plurality of PUSCHs are based on STxMP. Each PUSCH is associated with a different TRP, or each PUSCH is associated with a different TCI state, or each PUSCH is associated with a different CORESETPoolIndex, or each PUSCH is associated with a different SRS resource set.

In some embodiments, the plurality of PUSCHs are transmitted based on multi-DCI.

The reporting method according to embodiments of the present disclosure may include step S5101. For example, step S5101 may be implemented as an independent embodiment, but is not limited to this.

In this implementation or embodiment, in cases without contradiction, each step may be independent, arbitrarily combined, or the order may be exchanged. Optional modes or optional examples may be arbitrarily combined, and may be arbitrarily combined with any steps of other implementations or other embodiments.

FIG. 5B is an interaction schematic diagram of an uplink communication method according to still another embodiment of the present disclosure. As shown in FIG. 5B, an embodiment of the present disclosure relates to an uplink communication method, which may be performed by a network device. The method includes:
Step S5201: First information is sent to a terminal, where the first information is used for configuring a mode of sending a PHR by the terminal as a multi-PHR mode.
Step S5202: Second information sent by the terminal is received, where the second information includes a PHR corresponding to at least one PUSCH among a plurality of PUSCHs.

The plurality of PUSCHs are based on STxMP. Each PUSCH is associated with a different TRP, or each PUSCH is associated with a different TCI state, or each PUSCH is associated with a different CORESETPoolIndex, or each PUSCH is associated with a different SRS resource set.

In some embodiments, the plurality of PUSCHs are transmitted based on multi-DCI.

The uplink communication method according to embodiments of the present disclosure may include at least one of steps S5201 to S5202. For example, step S5201 may be implemented as an independent embodiment, step S5202 may be implemented as an independent embodiment, and so on, but is not limited to this. Steps S5201+S5202 may be implemented as an independent embodiment, but is not limited to this.

In this implementation or embodiment, in cases without contradiction, each step may be independent, arbitrarily combined, or the order may be exchanged. Optional modes or optional examples may be arbitrarily combined, and may be arbitrarily combined with any steps of other implementations or other embodiments.

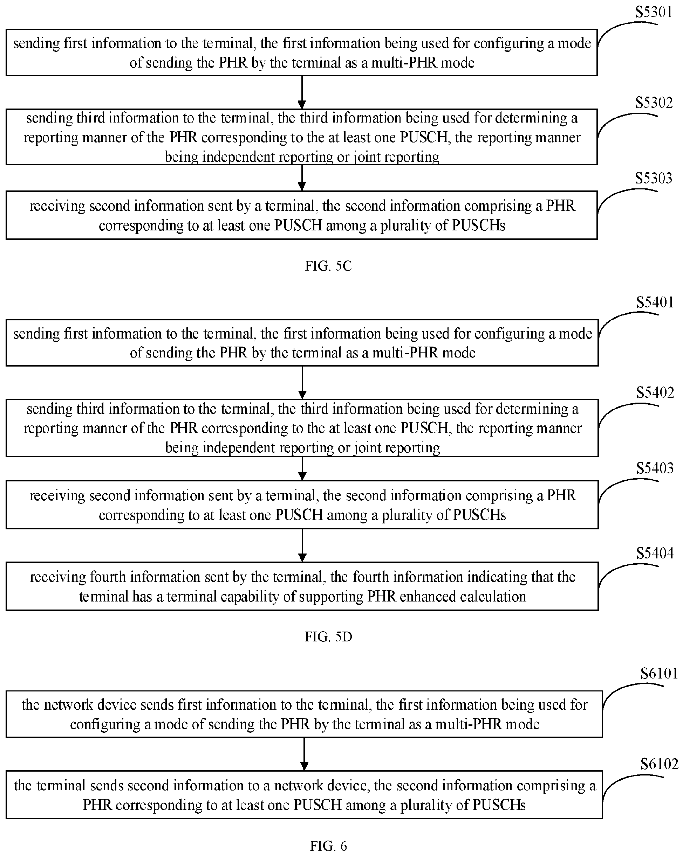

FIG. 5C is an interaction schematic diagram of an uplink communication method according to still another embodiment of the present disclosure. As shown in FIG. 5C, an embodiment of the present disclosure relates to an uplink communication method, which may be performed by a network device. The method includes:
Step S5301: First information is sent to a terminal, where the first information is used for configuring a mode of sending a PHR by the terminal as a multi-PHR mode.
Step S5302: Third information is sent to the terminal, where the third information is used for determining a reporting manner of the PHR corresponding to the at least one PUSCH, where the reporting manner is separate reporting or joint reporting.
Step S5303: Second information sent by the terminal is received, where the second information includes a PHR corresponding to at least one PUSCH among a plurality of PUSCHs.

The plurality of PUSCHs are based on STxMP. Each PUSCH is associated with a different TRP, or each PUSCH is associated with a different TCI state, or each PUSCH is associated with a different CORESETPoolIndex, or each PUSCH is associated with a different SRS resource set.

In some embodiments, the plurality of PUSCHs are transmitted based on multi-DCI.

The uplink communication method according to embodiments of the present disclosure may include at least one of steps S5301 to S5303. For example, step S5301 may be implemented as an independent embodiment, step S5302 may be implemented as an independent embodiment, and so on, but is not limited to this. Steps S5301+S5302 may be implemented as an independent embodiment, but is not limited to this.

In this implementation or embodiment, in cases without contradiction, each step may be independent, arbitrarily combined, or the order may be exchanged. Optional modes or optional examples may be arbitrarily combined, and may be arbitrarily combined with any steps of other implementations or other embodiments.

FIG. 5D is an interaction schematic diagram of an uplink communication method according to still another embodiment of the present disclosure. As shown in FIG. 5D, an embodiment of the present disclosure relates to an uplink communication method, which may be performed by a network device. The method includes:
Step S5401: First information is sent to a terminal, where the first information is used for configuring a mode of sending a PHR by the terminal as a multi-PHR mode.
Step S5402: Third information is sent to the terminal, where the third information is used for determining a reporting manner of the PHR corresponding to the at least one PUSCH, where the reporting manner is separate reporting or joint reporting.
Step S5403: Second information sent by the terminal is received, where the second information includes a PHR corresponding to at least one PUSCH among a plurality of PUSCHs.

The plurality of PUSCHs are based on STxMP. Each PUSCH is associated with a different TRP, or each PUSCH is associated with a different TCI state, or each PUSCH is associated with a different CORESETPoolIndex, or each PUSCH is associated with a different SRS resource set.

In some embodiments, the plurality of PUSCHs are transmitted based on multi-DCI.
Step S5404: Fourth information sent by the terminal is received, where the fourth information indicates that the terminal has a terminal capability of supporting the PHR enhanced calculation.

The uplink communication method according to embodiments of the present disclosure may include at least one of steps S5401 to S5404. For example, step S5401 may be implemented as an independent embodiment, step S5402 may be implemented as an independent embodiment, and so on, but is not limited to this. Steps S5401+S5402 may be implemented as an independent embodiment, but is not limited to this.

In this implementation or embodiment, in cases without contradiction, each step may be independent, arbitrarily combined, or the order may be exchanged. Optional modes or optional examples may be arbitrarily combined, and may be arbitrarily combined with any steps of other implementations or other embodiments.

FIG. 6 is an interaction schematic diagram of an uplink communication method according to yet another embodiment of the present disclosure. As shown in FIG. 6, an embodiment of the present disclosure relates to an uplink communication method, which may be used for a communication system. The method includes:
Step S6101: A network device sends first information to a terminal, where the first information is used for configuring a mode of sending a PHR by the terminal as a multi-PHR mode.
Step S6102: The terminal sends second information to the network device, where the second information includes a PHR corresponding to at least one PUSCH among a plurality of PUSCHs.

The plurality of PUSCHs are based on STxMP. Each PUSCH is associated with a different TRP, or each PUSCH is associated with a different TCI state, or each PUSCH is associated with a different CORESETPoolIndex, or each PUSCH is associated with a different SRS resource set.

The uplink communication method according to embodiments of the present disclosure may include at least one of steps S6101 to S6102. For example, step S6101 may be implemented as an independent embodiment, step S6102 may be implemented as an independent embodiment, and so on, but is not limited to this. Steps S6101+S6102 may be implemented as an independent embodiment, but is not limited to this.

In this implementation or embodiment, in cases without contradiction, each step may be independent, arbitrarily combined, or the order may be exchanged. Optional modes or optional examples may be arbitrarily combined, and may be arbitrarily combined with any steps of other implementations or other embodiments.

The following is an illustrative description of the above method.

### Optional Embodiment:

Embodiments of the present disclosure are used to solve the PHR enhanced reporting method when STxMP transmission is configured for M-DCI based PUSCH channels. The specific method is as follows:

When PUSCHs based on M-DCI for STxMP transmission are used, and the network simultaneously configures the multi-PHR mode (such as twoPHRMode) via higher layer signaling, different PUSCH transmissions (supporting scheduled DG PUSCH transmission and grant-free CG PUSCH transmission) need to be associated with different SRS resource sets/CORESETPoolIndexes. Through predefined or higher layer signaling configuration of "separate" or "joint" PHR reporting manner, the PHR MAC-CE reporting is defined as follows:
PHR triggering mode:
Per-panel triggered Type 1 PHR reporting:
In some embodiments, for the case where PUSCHs sent by different panels are separately reported for PHR, the PHR reporting corresponding to each PUSCH is the same as the existing STRP.

In some embodiments, for the case where PUSCHs sent by different panels are jointly reported for PHR, the following different scenarios need to be considered:
Case 1: Different PUSCHs corresponding to different panels/TCI states/SRS resource sets have overlapping time domain transmissions on the slot overlapping with the first slot of the PUSCH carrying the MAC-CE, i.e., slot n, and all are actual transmissions. PHRs corresponding to different PUSCHs need to be reported simultaneously. Each PHR includes {PH, P_{Cmax}}. For example, the P_{Cmax} and the PH are reported per panel, k={0,1}, where k is P_{Cmax} corresponding to different TCI states.
   It is further necessary to define the correspondence between the reported PHRs and the PUSCHs:
   Option 1: The first PHR corresponds to the PUSCH transmission associated with CORESETPoolIndex#0, and the second PHR corresponds to the PUSCH transmission associated with CORESETPoolIndex#1.
   Option 2: The first PHR corresponds to the PUSCH transmission associated with the SRS resource set with a smaller index, and the second PHR corresponds to the PUSCH transmission associated with the SRS resource set with a larger index.
Case 2: Among the different PUSCHs corresponding to different panels/TCI states/SRS resource sets, only one is actually transmitted on slot n, i.e., corresponding to STRP transmission.

Alt.2-1: Simultaneously report different types of PHRs {PH, P_{Cmax}} for different PUSCHs, actual + virtual.

It is further necessary to define the correspondence between the reported PHRs and the PUSCHs:
Option 1: The first PHR included in the second information corresponds to the PUSCH transmission associated with CORESETPoolIndex#0, and the second PHR included in the second information corresponds to the PUSCH transmission associated with CORESETPoolIndex#1.
Option 2: The first PHR included in the second information corresponds to the PUSCH transmission associated with the SRS resource set with a smaller index, and the second PHR included in the second information corresponds to the PUSCH transmission associated with the SRS resource set with a larger index.
Option 3: The first PHR included in the second information corresponds to the PUSCH transmission associated with the actual PUSCH, and the second PHR included in the second information corresponds to the PUSCH transmission associated with the virtual PUSCH.

Alt.2-2: Only report the PHR corresponding to the actual PUSCH. The correspondence is: the PHR corresponds to the PUSCH transmission associated with the actual PUSCH.

Case 3: None of the different PUSCHs corresponding to different panels/TCI states/SRS resource sets have actual PUSCH transmission on slot n.

Alt.3-1: Simultaneously report PHRs {PH, P_{Cmax}} corresponding to different PUSCHs, virtual + virtual. The reporting correspondence is the same as in Case 1.

Alt.3-2: Only report the virtual PHR of the PUSCH corresponding to the first CoresetPoolIndex, and do not report the PHR corresponding to the second PUSCH. The reporting correspondence is predefined.

Alt.3-3: Only report the virtual PHR of the PUSCH corresponding to the smaller SRS resource set index, and do not report the PHR corresponding to the second PUSCH.

Alt.3-4: Report none.

Optionally, embodiments of the present disclosure also introduce a new UE capability. When calculating the virtual PHR, the terminal reports whether it supports virtual PHR enhanced calculation. If supported, the specific calculation method for the virtual PHR may be predefined or configured by the network via RRC signaling, {ideal, non-ideal}. Ideal corresponds to the P_{Cmax}/PH calculation method in existing protocols, and non-ideal corresponds to considering the application of actual transmission parameters and/or non-ideal MPR factors. Enhanced cases include:
- For STRP transmission (under STxMP configuration, only one panel has PUSCH transmission, which is equivalent to STRP transmission), apply the actual PUSCH/related transmission parameters of the corresponding reference PUSCH for the panel and the MPR corresponding to the panel's transmission for P_{Cmax} and PH calculation.
- In the case of no transmission, apply the same reference PUSCH related transmission parameters and MPR for P_{Cmax} and PH calculation. For example, use the first reference PUSCH configuration by default.

Optionally, embodiments of the present disclosure also design the MAC CE:
Case 1: For the reporting manner where 2 PHRs are always reported, adopt predefined or higher layer signaling configuration (if terminal capability supports, report PHR based on reference PUSCH configuration). The PHR MAC-CE has a fixed byte size. The specific design is similar to S-DCI.
Case 2: For the reporting manner where only the actual transmitted PHR is reported, adopt predefined or higher layer signaling configuration (if terminal capability supports, do not report PHR based on reference PUSCH configuration). Specific methods are:
   1) A fixed byte size design may be used, using a unified MAC-CE as in Case 1. The advantage is that MPE may still support per-panel reporting.
   2) Configure via RRC signaling to enable not reporting P_{Cmax} or PHR for virtual PHR, then the PHR MAC-CE only contains the PHR corresponding to the actual PUSCH. The advantage is saving signaling overhead. The disadvantage is that per-panel MPE reporting cannot be supported.
   3) Add an indication field in the MAC CE for indication.

It is applicable to both single-input and multiple-input PHR reporting.

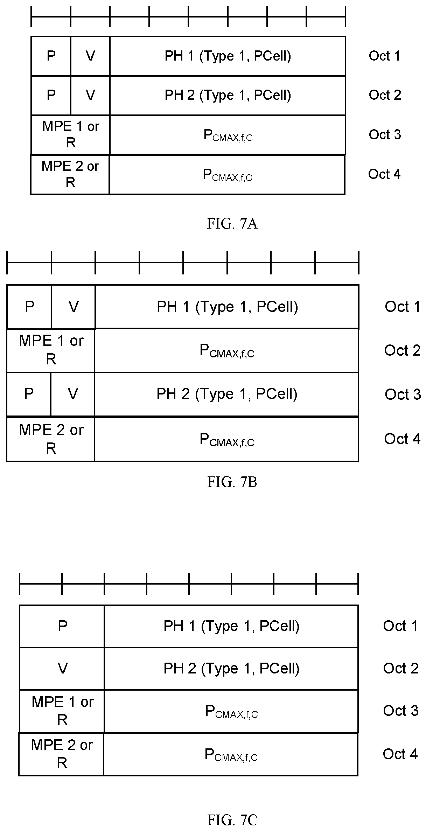

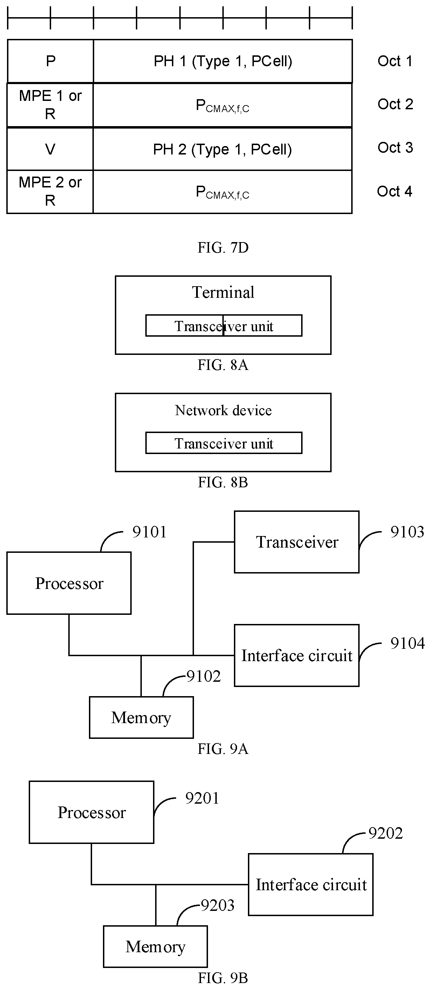

The single-input MAC-CE design is shown in Figures 7A-7D. FIG. 7A shows a schematic diagram of an independent indication mode according to an embodiment of the present disclosure. FIG. 7B shows a schematic diagram of an independent indication mode according to another embodiment of the present disclosure. FIG. 7C shows a schematic diagram of a joint indication mode according to another embodiment of the present disclosure. FIG. 7D shows a schematic diagram of a joint indication mode according to another embodiment of the present disclosure.

FIG. 8A is a schematic block diagram of a terminal proposed by an embodiment of the present disclosure. As shown in FIG. 8A, the terminal includes: a transceiver unit configured to receive first information sent by a network device, where the first information is used for configuring a mode of sending a PHR by the terminal as a multi-PHR mode; the transceiver unit is further configured to send second information to the network device, where the second information includes a PHR corresponding to at least one PUSCH among a plurality of PUSCHs; in which the plurality of PUSCHs are based on STxMP, and each PUSCH is associated with a different TRP, or each PUSCH is associated with a different TCI state, or each PUSCH is associated with a different CORESETPoolIndex, or each PUSCH is associated with a different SRS resource set.

In some embodiments of the present disclosure, the terminal further includes a processing unit configured to determine, based on a protocol agreement or third information sent by the network device, a reporting manner of the PHR corresponding to the at least one PUSCH, where the reporting manner is separate reporting or joint reporting.

In some embodiments of the present disclosure, the reporting manner is separate reporting, and the second information is reported in a respective MAC CE for each PUSCH among the plurality of PUSCHs configured based on STxMP.

In some embodiments of the present disclosure, the reporting manner is joint reporting, and the transceiver unit is further configured to:
obtain the PHR corresponding to each PUSCH by performing PHR measurement on the plurality of PUSCHs; and
report the second information to the network device by sending one PHR MAC CE, where the second information includes the PHR corresponding to the at least one PUSCH among the plurality of PUSCHs.

In some embodiments of the present disclosure, each PUSCH among the plurality of PUSCHs is actually transmitted on a slot overlapping with a slot n, where the slot n is a first slot of a PUSCH carrying the second information, and the slot n serves as a slot for reporting the PHR;
the second information includes the PHR corresponding to each PUSCH, and each PHR is an actual PHR and includes a PH and a P_{Cmax} on a component carrier where the PHR is located, where the PHR is determined based on a corresponding actually transmitted PUSCH.

In some embodiments of the present disclosure, the first PHR included in the second information is the PHR of the PUSCH corresponding to the first TCI state, and the second PHR included in the second information is the PHR of the PUSCH corresponding to the second TCI state; or
the first PHR included in the second information is the PHR of the PUSCH corresponding to the first CORESETPoolIndex, and the second PHR included in the second information is the PHR of the PUSCH corresponding to the second CORESETPoolIndex; or
the first PHR included in the second information is the PHR of the PUSCH corresponding to the first SRS resource set, and the second PHR included in the second information is the PHR of the PUSCH corresponding to the second SRS resource set, where an index of the first SRS resource set is smaller than an index of the second SRS resource set.

In some embodiments of the present disclosure, a first PUSCH among the plurality of PUSCHs is actually transmitted on a slot overlapping with a slot n, a second PUSCH among the plurality of PUSCHs is not transmitted on the slot overlapping with the slot n, where the slot n is a first slot of a PUSCH carrying the second information, and the slot n serves as a slot for reporting the PHR;
the second information includes the PHR corresponding to the first PUSCH and the PHR corresponding to the second PUSCH, the PHR corresponding to the first PUSCH is an actual PHR, the PHR corresponding to the second PUSCH is a virtual PHR, each PHR includes a PH and a P_{Cmax} on a component carrier where the PHR is located, where the PHR corresponding to the first PUSCH is determined based on a corresponding actually transmitted PUSCH, and the PHR corresponding to the second PUSCH is determined based on a corresponding reference PUSCH.

In some embodiments of the present disclosure, a first PUSCH among the plurality of PUSCHs is actually transmitted on a slot overlapping with a slot n, a second PUSCH among the plurality of PUSCHs is not transmitted on the slot overlapping with the slot n, where the slot n is a first slot of a PUSCH carrying the second information, and the slot n serves as a slot for reporting the PHR;
the second information includes the PHR corresponding to the first PUSCH and the PHR corresponding to the second PUSCH, the PHR corresponding to the first PUSCH is an actual PHR, the PHR corresponding to the second PUSCH is a virtual PHR, the PHR corresponding to the first PUSCH includes a PH and a P_{Cmax} on a component carrier where the PHR is located, and the PHR corresponding to the second PUSCH includes a PH; and
where the PHR corresponding to the first PUSCH is determined based on a corresponding actually transmitted PUSCH, and the PHR corresponding to the second PUSCH is determined based on a corresponding reference PUSCH.

In some embodiments of the present disclosure, the first PHR included in the second information is the PHR of the PUSCH corresponding to the first TCI state, and the second PHR included in the second information is the PHR of the PUSCH corresponding to the second TCI state; or
the first PHR included in the second information is the PHR of the PUSCH corresponding to the first CORESETPoolIndex, and the second PHR included in the second information is the PHR of the PUSCH corresponding to the second CORESETPoolIndex; or
the first PHR included in the second information is the PHR of the PUSCH corresponding to the first SRS resource set, and the second PHR included in the second information is the PHR of the PUSCH corresponding to the second SRS resource set, where an index of the first SRS resource set is smaller than an index of the second SRS resource set; or
the first PHR included in the second information is the PHR corresponding to the first PUSCH, and the second PHR included in the second information is the PHR corresponding to the second PUSCH.

In some embodiments of the present disclosure, a first PUSCH among the plurality of PUSCHs is actually transmitted on a slot overlapping with a slot n, a second PUSCH among the plurality of PUSCHs is not transmitted on the slot overlapping with the slot n, where the slot n is a first slot of a PUSCH carrying the second information, and the slot n serves as a slot for reporting the PHR; and
the second information includes the PHR corresponding to the first PUSCH, and the PHR is an actual PHR and includes a PH and a P_{Cmax} on a component carrier where the PHR is located, where the PHR is determined based on a corresponding actually transmitted PUSCH.

In some embodiments of the present disclosure, each PUSCH among the plurality of PUSCHs is not transmitted on a slot overlapping with a slot n, where the slot n is a first slot of a PUSCH carrying the second information, and the slot n serves as a slot for reporting the PHR; and
the second information includes the PHR corresponding to each PUSCH, each PHR is a virtual PHR, each PHR includes a PH, or each PHR includes a PH and a P_{Cmax} on a component carrier where the PHR is located, where the PHR is determined based on a corresponding reference PUSCH.

In some embodiments of the present disclosure, the first PHR included in the second information is the PHR of the PUSCH corresponding to the first TCI state, and the second PHR included in the second information is the PHR of the PUSCH corresponding to the second TCI state; or
the first PHR included in the second information is the PHR of the PUSCH corresponding to the first CORESETPoolIndex, and the second PHR included in the second information is the PHR of the PUSCH corresponding to the second CORESETPoolIndex; or
the first PHR included in the second information is the PHR of the PUSCH corresponding to the first SRS resource set, and the second PHR included in the second information is the PHR of the PUSCH corresponding to the second SRS resource set, where an index of the first SRS resource set is smaller than an index of the second SRS resource set.

In some embodiments of the present disclosure, each PUSCH among the plurality of PUSCHs is not transmitted on a slot overlapping with a slot n, where the slot n is a first slot of a PUSCH carrying the second information, and the slot n serves as a slot for reporting the PHR;
the second information includes one PHR, the PHR is a virtual PHR, the PHR includes a PH, or the PHR includes a PH and a P_{Cmax} on a component carrier where the PHR is located, where the PH is determined based on a corresponding reference PUSCH; and
where the PHR is a PHR of a PUSCH corresponding to a first TCI state, or the PHR is a PHR of a PUSCH corresponding to a first CORESETPoolIndex, or the PHR is a PHR of a PUSCH corresponding to an SRS resource set with a smaller index among two SRS resource sets.

In some embodiments of the present disclosure, the transceiver unit is further configured to:
send fourth information to the network device, where the fourth information indicates that the terminal has a terminal capability of supporting PHR enhanced calculation.

In some embodiments of the present disclosure, the PHR enhanced calculation includes:
a first PUSCH among the plurality of PUSCHs is actually transmitted on a slot overlapping with a slot n, a second PUSCH among the plurality of PUSCHs is not transmitted on the slot overlapping with the slot n, where the slot n is a first slot of a PUSCH carrying the second information, and the slot n serves as a slot for reporting the PHR; and
a PH and a P_{Cmax} on a component carrier where the PHR is located, in the PHR corresponding to the second PUSCH, are determined based on at least part of transmission parameters of the first PUSCH and/or by taking into account a non-ideal MPR parameter corresponding to the second PUSCH.

In some embodiments of the present disclosure, the PHR enhanced calculation includes:
each PUSCH among the plurality of PUSCHs is not transmitted on a slot overlapping with a slot n, where the slot n is a first slot of a PUSCH carrying the second information, and the slot n serves as a slot for reporting the PHR; and
a PH and a P_{Cmax} on a component carrier where the PHR is located, in the PHR corresponding to each PUSCH, are determined based on at least part of transmission parameters of any one PUSCH among the plurality of PUSCHs and/or by taking into account a non-ideal MPR parameter corresponding to the any one PUSCH.

In some embodiments of the present disclosure, the transceiver unit is further configured to:
receive first information sent by the network device, where the first information is used for configuring a mode of sending the PHR by the terminal as a multi-PHR mode.

In some embodiments of the present disclosure, the plurality of PUSCHs are transmitted based on multi-DCI.

FIG. 8B is a schematic block diagram of a network device proposed by an embodiment of the present disclosure. As shown in FIG. 8B, the network device includes: a transceiver unit configured to receive second information sent by a terminal, where the second information includes a PHR corresponding to at least one PUSCH among a plurality of PUSCHs; in which the plurality of PUSCHs are based on STxMP, and each PUSCH is associated with a different TRP, or each PUSCH is associated with a different TCI state, or each PUSCH is associated with a different CORESETPoolIndex, or each PUSCH is associated with a different SRS resource set.

In some embodiments of the present disclosure, the transceiver unit is further configured to:
send third information to the terminal, where the third information is used for determining a reporting manner of the PHR corresponding to the at least one PUSCH, where the reporting manner is separate reporting or joint reporting.

In some embodiments of the present disclosure, the reporting manner is separate reporting, and the second information is reported in a respective MAC CE for each PUSCH among the plurality of PUSCHs configured based on STxMP.

In some embodiments of the present disclosure, the reporting manner is joint reporting, and the transceiver unit is further configured to:
receive the second information reported by the terminal by sending one PHR MAC CE, where the second information includes the PHR corresponding to the at least one PUSCH among the plurality of PUSCHs, and the PHR is obtained by performing PHR measurement on the plurality of PUSCHs.

In some embodiments of the present disclosure, each PUSCH among the plurality of PUSCHs is actually transmitted on a slot overlapping with a slot n, where the slot n is a first slot of a PUSCH carrying the second information, and the slot n serves as a slot for reporting the PHR; and
the second information includes the PHR corresponding to each PUSCH, and each PHR is an actual PHR and includes a PH and a P_{Cmax} on a component carrier where the PHR is located, where the PHR is determined based on a corresponding actually transmitted PUSCH.

In some embodiments of the present disclosure, the first PHR included in the second information is the PHR of the PUSCH corresponding to the first TCI state, and the second PHR included in the second information is the PHR of the PUSCH corresponding to the second TCI state; or
the first PHR included in the second information is the PHR of the PUSCH corresponding to the first CORESETPoolIndex, and the second PHR included in the second information is the PHR of the PUSCH corresponding to the second CORESETPoolIndex; or
the first PHR included in the second information is the PHR of the PUSCH corresponding to the first SRS resource set, and the second PHR included in the second information is the PHR of the PUSCH corresponding to the second SRS resource set, where an index of the first SRS resource set is smaller than an index of the second SRS resource set.

In some embodiments of the present disclosure, a first PUSCH among the plurality of PUSCHs is actually transmitted on a slot overlapping with a slot n, a second PUSCH among the plurality of PUSCHs is not transmitted on the slot overlapping with the slot n, where the slot n is a first slot of a PUSCH carrying the second information, and the slot n serves as a slot for reporting the PHR; and
the second information includes the PHR corresponding to the first PUSCH and the PHR corresponding to the second PUSCH, the PHR corresponding to the first PUSCH is an actual PHR, the PHR corresponding to the second PUSCH is a virtual PHR, each PHR includes a PH and a P_{Cmax} on a component carrier where the PHR is located, where the PHR corresponding to the first PUSCH is determined based on a corresponding actually transmitted PUSCH, and the PHR corresponding to the second PUSCH is determined based on a corresponding reference PUSCH.

In some embodiments of the present disclosure, a first PUSCH among the plurality of PUSCHs is actually transmitted on a slot overlapping with a slot n, a second PUSCH among the plurality of PUSCHs is not transmitted on the slot overlapping with the slot n, where the slot n is a first slot of a PUSCH carrying the second information, and the slot n serves as a slot for reporting the PHR;
the second information includes the PHR corresponding to the first PUSCH and the PHR corresponding to the second PUSCH, the PHR corresponding to the first PUSCH is an actual PHR, the PHR corresponding to the second PUSCH is a virtual PHR, the PHR corresponding to the first PUSCH includes a PH and a P_{Cmax} on a component carrier where the PHR is located, and the PHR corresponding to the second PUSCH includes a PH; and
where the PHR corresponding to the first PUSCH is determined based on a corresponding actually transmitted PUSCH, and the PHR corresponding to the second PUSCH is determined based on a corresponding reference PUSCH.

In some embodiments of the present disclosure, the first PHR included in the second information is the PHR of the PUSCH corresponding to the first TCI state, and the second PHR included in the second information is the PHR of the PUSCH corresponding to the second TCI state; or
the first PHR included in the second information is the PHR of the PUSCH corresponding to the first CORESETPoolIndex, and the second PHR included in the second information is the PHR of the PUSCH corresponding to the second CORESETPoolIndex; or
the first PHR included in the second information is the PHR of the PUSCH corresponding to the first SRS resource set, and the second PHR included in the second information is the PHR of the PUSCH corresponding to the second SRS resource set, where an index of the first SRS resource set is smaller than an index of the second SRS resource set; or
the first PHR included in the second information is the PHR corresponding to the first PUSCH, and the second PHR included in the second information is the PHR corresponding to the second PUSCH.

In some embodiments of the present disclosure, a first PUSCH among the plurality of PUSCHs is actually transmitted on a slot overlapping with a slot n, a second PUSCH among the plurality of PUSCHs is not transmitted on the slot overlapping with the slot n, where the slot n is a first slot of a PUSCH carrying the second information, and the slot n serves as a slot for reporting the PHR; and
the second information includes the PHR corresponding to the first PUSCH, and the PHR is an actual PHR and includes a PH and a P_{Cmax} on a component carrier where the PHR is located, where the PHR is determined based on a corresponding actually transmitted PUSCH.

In some embodiments of the present disclosure, each PUSCH among the plurality of PUSCHs is not transmitted on a slot overlapping with a slot n, where the slot n is a first slot of a PUSCH carrying the second information, and the slot n serves as a slot for reporting the PHR; and
the second information includes the PHR corresponding to each PUSCH, each PHR is a virtual PHR, each PHR includes a PH, or each PHR includes a PH and a P_{Cmax} on a component carrier where the PHR is located, where the PHR is determined based on a corresponding reference PUSCH.

In some embodiments of the present disclosure, the first PHR included in the second information is the PHR of the PUSCH corresponding to the first TCI state, and the second PHR included in the second information is the PHR of the PUSCH corresponding to the second TCI state; or
the first PHR included in the second information is the PHR of the PUSCH corresponding to the first CORESETPoolIndex, and the second PHR included in the second information is the PHR of the PUSCH corresponding to the second CORESETPoolIndex; or
the first PHR included in the second information is the PHR of the PUSCH corresponding to the first SRS resource set, and the second PHR included in the second information is the PHR of the PUSCH corresponding to the second SRS resource set, where an index of the first SRS resource set is smaller than an index of the second SRS resource set.

In some embodiments of the present disclosure, each PUSCH among the plurality of PUSCHs is not transmitted on a slot overlapping with a slot n, where the slot n is a first slot of a PUSCH carrying the second information, and the slot n serves as a slot for reporting the PHR;
the second information includes one PHR, the PHR is a virtual PHR, the PHR includes a PH, or the PHR includes a PH and a P_{Cmax} on a component carrier where the PHR is located, where the PH is determined based on a corresponding reference PUSCH; and
where the PHR is a PHR of a PUSCH corresponding to a first TCI state, or the PHR is a PHR of a PUSCH corresponding to a first CORESETPoolIndex, or the PHR is a PHR of a PUSCH corresponding to an SRS resource set with a smaller index among two SRS resource sets.

In some embodiments of the present disclosure, the transceiver unit is further configured to:
receive fourth information sent by the terminal, where the fourth information indicates that the terminal has a terminal capability of supporting PHR enhanced calculation.

In some embodiments of the present disclosure, the PHR enhanced calculation includes:
a first PUSCH among the plurality of PUSCHs is actually transmitted on a slot overlapping with a slot n, a second PUSCH among the plurality of PUSCHs is not transmitted on the slot overlapping with the slot n, where the slot n is a first slot of a PUSCH carrying the second information, and the slot n serves as a slot for reporting the PHR; an
a PH and a P_{Cmax} on a component carrier where the PHR is located, in the PHR corresponding to the second PUSCH, are determined based on at least part of transmission parameters of the first PUSCH and/or by taking into account a non-ideal MPR parameter corresponding to the second PUSCH.

In some embodiments of the present disclosure, the PHR enhanced calculation includes:
each PUSCH among the plurality of PUSCHs is not transmitted on a slot overlapping with a slot n, where the slot n is a first slot of a PUSCH carrying the second information, and the slot n serves as a slot for reporting the PHR; and
a PH and a P_{Cmax} on a component carrier where the PHR is located, in the PHR corresponding to each PUSCH, are determined based on at least part of transmission parameters of any one PUSCH among the plurality of PUSCHs and/or by taking into account a non-ideal MPR parameter corresponding to the any one PUSCH.

In some embodiments of the present disclosure, the transceiver unit is further configured to:
receive first information sent by the network device, where the first information is used for configuring a mode of sending the PHR by the terminal as a multi-PHR mode.

In some embodiments of the present disclosure, the plurality of PUSCHs are transmitted based on multi-DCI.

It should be understood that the division of units or modules in the above apparatus is only a logical function division, and in actual implementation, they may be fully or partially integrated into one physical entity or physically separated. Furthermore, the units or modules in the apparatus may be implemented in the form of a processor calling software: for example, the apparatus includes a processor connected to a memory, where instructions are stored in the memory, and the processor calls the instructions stored in the memory to implement any of the above methods or implement the functions of the units or modules of the above apparatus. The processor may be, for example, a general-purpose processor, such as a central processing unit (CPU) or a microprocessor, and the memory may be a memory within the apparatus or a memory external to the apparatus. Alternatively, the units or modules in the apparatus may be implemented in the form of a hardware circuit. The functions of some or all of the units or modules may be implemented by designing the hardware circuit. The hardware circuit may be understood as one or more processors. For example, in one implementation, the hardware circuit is an application-specific integrated circuit (ASIC), and the functions of some or all of the above units or modules are implemented by designing the logical relationship of circuit elements. For another example, in another implementation, the hardware circuit may be implemented by a programmable logic device (PLD), taking a field programmable gate array (FPGA) as an example, which may include a large number of logic gate circuits, and the connection relationship between the logic gate circuits is configured by a configuration file, implementing the functions of some or all of the above units or modules. All units or modules of the above apparatus may be implemented entirely in the form of a processor calling software, or entirely in the form of a hardware circuit, or partially in the form of a processor calling software and the remaining in the form of a hardware circuit.

As shown in FIG. 9A, FIG. 9A is a schematic block diagram of a communication device proposed by an embodiment of the present disclosure. The communication device 9100 includes one or more processors 9101. The processor 9101 may be a general-purpose processor or a special-purpose processor, etc., for example, a baseband processor or a central processing unit. The baseband processor may be used to process communication protocols and communication data. The central processing unit may be used to control a communication device (e.g., a base station, a baseband chip, a terminal device, a terminal device chip, a DU, or a CU, etc.), execute programs, and process data of the programs. The processor 9101 is configured to invoke instructions to cause the communication device 9100 to perform any of the above methods.

In some embodiments, the communication device 9100 further includes one or more memories 9102 for storing instructions. Optionally, all or part of the memory 9102 may also be located outside the communication device 9100.

In some embodiments, the communication device 9100 further includes one or more transceivers 9103. When the communication device 9100 includes one or more transceivers 9103, the sending, receiving and other communication steps in the above methods are performed by the transceiver 9103, and the other steps are performed by the processor 9101.

In some embodiments, the transceiver may include a receiver and a transmitter, and the receiver and the transmitter may be separate or integrated together. Optionally, terms such as transceiver, transceiver unit, transceiver machine, transceiver circuit may be interchanged, terms such as transmitter, transmitting unit, transmitting machine, transmitting circuit may be interchanged, and terms such as receiver, receiving unit, receiving machine, receiving circuit may be interchanged.

Optionally, the communication device 9100 further includes one or more interface circuits 9104, which are connected to the memory 9102. The interface circuit 9104 may be used to receive signals from the memory 9102 or other devices, and may be used to send signals to the memory 9102 or other devices. For example, the interface circuit 9104 may read instructions stored in the memory 9102 and send the instructions to the processor 9101.

The communication device 9100 described in the above embodiments may be a network device or a terminal, but the scope of the communication device 9100 described in the present disclosure is not limited to this, and the structure of the communication device 9100 may not be limited by FIG. 9A. The communication device may be an independent device or may be part of a larger device. For example, the communication device may be: (1) an independent integrated circuit IC, or a chip, or a chip system or subsystem; (2) a set of one or more ICs, optionally, the IC set may also include a storage component for storing data and programs; (3) an ASIC, such as a modem; (4) a module that may be embedded in other devices; (5) a receiver, a terminal device, an intelligent terminal device, a cellular phone, a wireless device, a handset, a mobile unit, a vehicle-mounted device, a network device, a cloud device, an artificial intelligence device, etc.; (6) others, etc.

FIG. 9B is a schematic block diagram of a chip proposed by an embodiment of the present disclosure. For the case where the communication device 9100 may be a chip or a chip system, reference may be made to the schematic structural diagram of a chip 9200 shown in FIG. 9B, but is not limited to this.

The chip 9200 includes one or more processors 9201. The processor 9201 is configured to invoke instructions to cause the chip 9200 to perform any of the above methods.

In some embodiments, the chip 9200 further includes one or more interface circuits 9202, which are connected to a memory 9203. The interface circuit 9202 may be used to receive signals from the memory 9203 or other devices, and may be used to send signals to the memory 9203 or other devices. For example, the interface circuit 9202 may read instructions stored in the memory 9203 and send the instructions to the processor 9201. Optionally, terms such as interface circuit, interface, transceiver pin, transceiver may be interchanged.

In some embodiments, the chip 9200 further includes one or more memories 9203 for storing instructions. Optionally, all or part of the memory 9203 may be located outside the chip 9200.

The present disclosure also proposes a storage medium, where the storage medium stores instructions. When the instructions are executed by the communication device 9100, the communication device 9100 is caused to perform any of the above methods. Optionally, the storage medium is an electronic storage medium. Optionally, the storage medium is a computer-readable storage medium, but is not limited to this, and may also be other device-readable storage media. Optionally, the storage medium may be a non-transitory storage medium, but is not limited to this, and may also be a transitory storage medium.

In embodiments of the present disclosure, a processor is a circuit with signal processing capability. In an implementation, the processor may be a circuit with instruction reading and execution capability, such as a central processing unit (CPU), a microprocessor, a graphics processing unit (GPU) (which may be understood as a microprocessor), or a digital signal processor (DSP). In another implementation, the processor may implement certain functions through the logical relationship of a hardware circuit, where the logical relationship of the hardware circuit is fixed or reconfigurable. For example, the processor is an application-specific integrated circuit (ASIC) or a hardware circuit implemented by a programmable logic device (PLD), such as an FPGA. In a reconfigurable hardware circuit, the process in which the processor loads a configuration document to configure the hardware circuit may be understood as the process in which the processor loads instructions to implement the functions of some or all of the above units or modules. Furthermore, it may also be a hardware circuit designed for artificial intelligence, which may be understood as an ASIC, such as a neural network processing unit (NPU), a tensor processing unit (TPU), a deep learning processing unit (DPU), etc.

The present disclosure also proposes a program product that, when executed by the communication device 9100, causes the communication device 9100 to perform any of the above methods. Optionally, the program product is a computer program product.

The present disclosure also proposes a computer program that, when executed on a computer, causes the computer to perform any of the above methods.

In the above embodiments, it may be implemented wholly or partially by software, hardware, firmware, or any combination thereof. When implemented using software, it may be implemented wholly or partially in the form of a computer program product. The computer program product includes one or more computer programs. When the computer program is loaded and executed on a computer, the processes or functions according to embodiments of the present disclosure are generated wholly or partially. The computer may be a general-purpose computer, a special-purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (e.g., coaxial cable, fiber optic, digital subscriber line (DSL)) or wirelessly (e.g., infrared, wireless, microwave, etc.). The computer-readable storage medium may be any available medium that may be accessed by a computer or a data storage device such as a server, data center, etc., that includes an integration of one or more available media. The available medium may be a magnetic medium (e.g., a floppy disk, a hard disk, a magnetic tape), an optical medium (e.g., a high-density digital video disc (DVD)), or a semiconductor medium (e.g., a solid state disk (SSD)), etc.

A person of ordinary skill in the art may realize that the units and algorithm steps of the examples described in conjunction with the implementations disclosed herein may be implemented in electronic hardware, or a combination of computer software and electronic hardware. Whether these functions are performed in hardware or software depends on the specific application and design constraints of the technical solution. Skilled persons may use different methods for each specific application to implement the described functions, but such implementation should not be considered to be beyond the scope of the present disclosure.

A person skilled in the art may clearly understand that for the convenience and brevity of description, the specific working processes of the systems, devices, and units described above may refer to the corresponding processes in the foregoing method embodiments, and will not be repeated here.

The above description is only specific implementations of the present disclosure, but the protection scope of the present disclosure is not limited to the above-described embodiments. A person skilled in the art may extend the protection scope of the present disclosure based on the content of the present disclosure.

## Claims

1. An uplink communication method, performed by a terminal, comprising:
sending, based on a configured multi-power headroom report (PHR) mode, second information to a network device, the second information comprising a PHR corresponding to at least one physical uplink shared channel (PUSCH) among a plurality of PUSCHs,
wherein the plurality of PUSCHs are based on simultaneous transmission from multi-panel (STxMP), and each PUSCH is associated with a different transmission and reception point (TRP), or each PUSCH is associated with a different transmission configuration indication (TCI) state, or each PUSCH is associated with a different control resource set pool index (CORESETPoolIndex), or each PUSCH is associated with a different sounding reference signal (SRS) resource set.

2. The method according to claim 1, further comprising:
determining, based on a protocol agreement or third information sent by the network device, a reporting manner of the PHR corresponding to the at least one PUSCH, the reporting manner being separate reporting or joint reporting.

3. The method according to claim 2, wherein the reporting manner is separate reporting, and the second information is reported in a respective medium access control control element (MAC CE) for each PUSCH among the plurality of PUSCHs configured based on the STxMP.

4. The method according to claim 2, wherein the reporting manner is joint reporting, and sending the second information to the network device comprises:
obtaining a PHR corresponding to each PUSCH by performing PHR measurement on the plurality of PUSCHs; and
reporting the second information to the network device by sending one PHR MAC CE, the second information comprising the PHR corresponding to the at least one PUSCH among the plurality of PUSCHs.

5. The method according to claim 4, wherein each PUSCH among the plurality of PUSCHs is actually transmitted on a slot overlapping with a slot n, the slot n is a first slot of a PUSCH carrying the second information, and the slot n serves as a slot for reporting the PHR; and
the second information comprises the PHR corresponding to each PUSCH, each PHR is an actual PHR and comprises a power headroom (PH) and a configured maximum output power (P_{Cmax}) on a component carrier where the PHR is located, and the PHR is determined based on a corresponding actually transmitted PUSCH.

6. The method according to claim 5, wherein:
a first PHR comprised in the second information is a PHR of a PUSCH corresponding to a first TCI state, and a second PHR comprised in the second information is a PHR of a PUSCH corresponding to a second TCI state; or
a first PHR comprised in the second information is a PHR of a PUSCH corresponding to a first CORESETPoolIndex, and a second PHR comprised in the second information is a PHR of a PUSCH corresponding to a second CORESETPoolIndex; or
a first PHR comprised in the second information is a PHR of a PUSCH corresponding to a first SRS resource set, and a second PHR comprised in the second information is a PHR of a PUSCH corresponding to a second SRS resource set, wherein an index of the first SRS resource set is smaller than an index of the second SRS resource set.

7. The method according to claim 4, wherein a first PUSCH among the plurality of PUSCHs is actually transmitted on a slot overlapping with a slot n, a second PUSCH among the plurality of PUSCHs is not transmitted on the slot overlapping with the slot n, the slot n is a first slot of a PUSCH carrying the second information, and the slot n serves as a slot for reporting the PHR; and
the second information comprises the PHR corresponding to the first PUSCH and the PHR corresponding to the second PUSCH, the PHR corresponding to the first PUSCH is an actual PHR, the PHR corresponding to the second PUSCH is a virtual PHR, and each PHR comprises a PH and a P_{Cmax} on a component carrier where the PHR is located, wherein the PHR corresponding to the first PUSCH is determined based on a corresponding actually transmitted PUSCH, and the PHR corresponding to the second PUSCH is determined based on a corresponding reference PUSCH.

8. The method according to claim 4, wherein a first PUSCH among the plurality of PUSCHs is actually transmitted on a slot overlapping with a slot n, a second PUSCH among the plurality of PUSCHs is not transmitted on the slot overlapping with the slot n, the slot n is a first slot of a PUSCH carrying the second information, and the slot n serves as a slot for reporting the PHR;
the second information comprises the PHR corresponding to the first PUSCH and the PHR corresponding to the second PUSCH, the PHR corresponding to the first PUSCH is an actual PHR, the PHR corresponding to the second PUSCH is a virtual PHR, the PHR corresponding to the first PUSCH comprises a PH and a P_{Cmax} on a component carrier where the PHR is located, and the PHR corresponding to the second PUSCH comprises a PH; and
wherein the PHR corresponding to the first PUSCH is determined based on a corresponding actually transmitted PUSCH, and the PHR corresponding to the second PUSCH is determined based on a corresponding reference PUSCH.

9. The method according to claim 7 or 8, wherein:
a first PHR comprised in the second information is a PHR of a PUSCH corresponding to a first TCI state, and a second PHR comprised in the second information is a PHR of a PUSCH corresponding to a second TCI state; or
a first PHR comprised in the second information is a PHR of a PUSCH corresponding to a first CORESETPoolIndex, and a second PHR comprised in the second information is a PHR of a PUSCH corresponding to a second CORESETPoolIndex; or
a first PHR comprised in the second information is a PHR of a PUSCH corresponding to a first SRS resource set, and a second PHR comprised in the second information is a PHR of a PUSCH corresponding to a second SRS resource set, wherein an index of the first SRS resource set is smaller than an index of the second SRS resource set; or
a first PHR comprised in the second information is the PHR corresponding to the first PUSCH, and a second PHR comprised in the second information is the PHR corresponding to the second PUSCH.

10. The method according to claim 4, wherein a first PUSCH among the plurality of PUSCHs is actually transmitted on a slot overlapping with a slot n, a second PUSCH among the plurality of PUSCHs is not transmitted on the slot overlapping with the slot n, the slot n is a first slot of a PUSCH carrying the second information, and the slot n serves as a slot for reporting the PHR; and
the second information comprises the PHR corresponding to the first PUSCH, and the PHR is an actual PHR and comprises a PH and a P_{Cmax} on a component carrier where the PHR is located, wherein the PHR is determined based on a corresponding actually transmitted PUSCH.

11. The method according to claim 4, wherein each PUSCH among the plurality of PUSCHs is not transmitted on a slot overlapping with a slot n, the slot n is a first slot of a PUSCH carrying the second information, and the slot n serves as a slot for reporting the PHR; and
the second information comprises the PHR corresponding to each PUSCH, each PHR is a virtual PHR, and each PHR comprises a PH, or each PHR comprises a PH and a P_{Cmax} on a component carrier where the PHR is located, wherein the PHR is determined based on a corresponding reference PUSCH.

12. The method according to claim 11, wherein:
a first PHR comprised in the second information is a PHR of a PUSCH corresponding to a first TCI state, and a second PHR comprised in the second information is a PHR of a PUSCH corresponding to a second TCI state; or
a first PHR comprised in the second information is a PHR of a PUSCH corresponding to a first CORESETPoolIndex, and a second PHR comprised in the second information is a PHR of a PUSCH corresponding to a second CORESETPoolIndex; or
a first PHR comprised in the second information is a PHR of a PUSCH corresponding to a first SRS resource set, and a second PHR comprised in the second information is a PHR of a PUSCH corresponding to a second SRS resource set, wherein an index of the first SRS resource set is smaller than an index of the second SRS resource set.

13. The method according to claim 4, wherein each PUSCH among the plurality of PUSCHs is not transmitted on a slot overlapping with a slot n, the slot n is a first slot of a PUSCH carrying the second information, and the slot n serves as a slot for reporting the PHR;
the second information comprises one PHR, the PHR is a virtual PHR, and the PHR comprises a PH, or the PHR comprises a PH and a P_{Cmax} on a component carrier where the PHR is located, wherein the PH is determined based on a corresponding reference PUSCH; and
wherein the PHR is a PHR of a PUSCH corresponding to a first TCI state, or the PHR is a PHR of a PUSCH corresponding to a first CORESETPoolIndex, or the PHR is a PHR of a PUSCH corresponding to an SRS resource set with a smaller index among two SRS resource sets.

14. The method according to any one of claims 1 to 13, further comprising:
sending fourth information to the network device, the fourth information indicating that the terminal has a terminal capability of supporting PHR enhanced calculation.

15. The method according to claim 14, wherein the PHR enhanced calculation comprises:
a first PUSCH among the plurality of PUSCHs is actually transmitted on a slot overlapping with a slot n, a second PUSCH among the plurality of PUSCHs is not transmitted on the slot overlapping with the slot n, the slot n is a first slot of a PUSCH carrying the second information, and the slot n serves as a slot for reporting the PHR; and
a PH and a P_{Cmax} on a component carrier where the PHR is located, in the PHR corresponding to the second PUSCH, are determined based on at least part of transmission parameters of the first PUSCH and/or by taking into account a non-ideal maximum power reduction (MPR) parameter corresponding to the second PUSCH.

16. The method according to claim 14, wherein the PHR enhanced calculation comprises:
each PUSCH among the plurality of PUSCHs is not transmitted on a slot overlapping with a slot n, the slot n is a first slot of a PUSCH carrying the second information, and the slot n serves as a slot for reporting the PHR; and
a PH and a P_{Cmax} on a component carrier where the PHR is located, in the PHR corresponding to each PUSCH, are determined based on at least part of transmission parameters of any one PUSCH among the plurality of PUSCHs and/or by taking into account a non-ideal MPR parameter corresponding to the any one PUSCH.

17. The method according to any one of claims 1 to 16, further comprising:
receiving first information sent by the network device, the first information being used for configuring a mode of sending the PHR by the terminal as a multi-PHR mode.

18. The method according to any one of claims 1 to 17, wherein the plurality of PUSCHs are transmitted based on multi-downlink control information (DCI).

19. An uplink communication method, performed by a network device, comprising:
receiving second information sent by a terminal, the second information comprising a power headroom report (PHR) corresponding to at least one physical uplink shared channel (PUSCH) among a plurality of PUSCHs,
wherein the plurality of PUSCHs are based on simultaneous transmission from multi-panel (STxMP), and each PUSCH is associated with a different transmission and reception point (TRP), or each PUSCH is associated with a different transmission configuration indication (TCI) state, or each PUSCH is associated with a different control resource set pool index (CORESETPoolIndex), or each PUSCH is associated with a different sounding reference signal (SRS) resource set.

20. The method according to claim 19, further comprising:
sending third information to the terminal, the third information being used for determining a reporting manner of the PHR corresponding to the at least one PUSCH, the reporting manner being separate reporting or joint reporting.

21. The method according to claim 20, wherein the reporting manner is separate reporting, and the second information is reported in a respective medium access control control element (MAC CE) for each PUSCH among the plurality of PUSCHs configured based on the STxMP.

22. The method according to claim 21, wherein the reporting manner is joint reporting, and receiving the second information sent by the terminal comprises:
receiving the second information reported by the terminal by sending one PHR MAC CE, wherein the second information comprises the PHR corresponding to the at least one PUSCH among the plurality of PUSCHs, and the PHR is obtained by performing PHR measurement on the plurality of PUSCHs.

23. The method according to claim 22, wherein each PUSCH among the plurality of PUSCHs is actually transmitted on a slot overlapping with a slot n, the slot n is a first slot of a PUSCH carrying the second information, and the slot n serves as a slot for reporting the PHR; and
the second information comprises the PHR corresponding to each PUSCH, each PHR is an actual PHR and comprises a power headroom (PH) and a configured maximum output power P_{Cmax} on a component carrier where the PHR is located, and the PHR is determined based on a corresponding actually transmitted PUSCH.

24. The method according to claim 22, wherein:
a first PHR comprised in the second information is a PHR of a PUSCH corresponding to a first TCI state, and a second PHR comprised in the second information is a PHR of a PUSCH corresponding to a second TCI state; or
a first PHR comprised in the second information is a PHR of a PUSCH corresponding to a first CORESETPoolIndex, and a second PHR comprised in the second information is a PHR of a PUSCH corresponding to a second CORESETPoolIndex; or
a first PHR comprised in the second information is a PHR of a PUSCH corresponding to a first SRS resource set, and a second PHR comprised in the second information is a PHR of a PUSCH corresponding to a second SRS resource set, wherein an index of the first SRS resource set is smaller than an index of the second SRS resource set.

25. The method according to claim 22, wherein a first PUSCH among the plurality of PUSCHs is actually transmitted on a slot overlapping with a slot n, a second PUSCH among the plurality of PUSCHs is not transmitted on the slot overlapping with the slot n, the slot n is a first slot of a PUSCH carrying the second information, and the slot n serves as a slot for reporting the PHR; and
the second information comprises the PHR corresponding to the first PUSCH and the PHR corresponding to the second PUSCH, the PHR corresponding to the first PUSCH is an actual PHR, the PHR corresponding to the second PUSCH is a virtual PHR, and each PHR comprises a PH and a P_{Cmax} on a component carrier where the PHR is located, wherein the PHR corresponding to the first PUSCH is determined based on a corresponding actually transmitted PUSCH, and the PHR corresponding to the second PUSCH is determined based on a corresponding reference PUSCH.

26. The method according to claim 22, wherein a first PUSCH among the plurality of PUSCHs is actually transmitted on a slot overlapping with a slot n, a second PUSCH among the plurality of PUSCHs is not transmitted on the slot overlapping with the slot n, the slot n is a first slot of a PUSCH carrying the second information, and the slot n serves as a slot for reporting the PHR;
the second information comprises the PHR corresponding to the first PUSCH and the PHR corresponding to the second PUSCH, the PHR corresponding to the first PUSCH is an actual PHR, the PHR corresponding to the second PUSCH is a virtual PHR, the PHR corresponding to the first PUSCH comprises a PH and a P_{Cmax} on a component carrier where the PHR is located, and the PHR corresponding to the second PUSCH comprises a PH; and
wherein the PHR corresponding to the first PUSCH is determined based on a corresponding actually transmitted PUSCH, and the PHR corresponding to the second PUSCH is determined based on a corresponding reference PUSCH.

27. The method according to claim 25 or 26, wherein:
a first PHR comprised in the second information is a PHR of a PUSCH corresponding to a first TCI state, and a second PHR comprised in the second information is a PHR of a PUSCH corresponding to a second TCI state; or
a first PHR comprised in the second information is a PHR of a PUSCH corresponding to a first CORESETPoolIndex, and a second PHR comprised in the second information is a PHR of a PUSCH corresponding to a second CORESETPoolIndex; or
a first PHR comprised in the second information is a PHR of a PUSCH corresponding to a first SRS resource set, and a second PHR comprised in the second information is a PHR of a PUSCH corresponding to a second SRS resource set, wherein an index of the first SRS resource set is smaller than an index of the second SRS resource set; or
a first PHR comprised in the second information is the PHR corresponding to the first PUSCH, and a second PHR comprised in the second information is the PHR corresponding to the second PUSCH.

28. The method according to claim 22, wherein a first PUSCH among the plurality of PUSCHs is actually transmitted on a slot overlapping with a slot n, a second PUSCH among the plurality of PUSCHs is not transmitted on the slot overlapping with the slot n, the slot n is a first slot of a PUSCH carrying the second information, and the slot n serves as a slot for reporting the PHR; and
the second information comprises the PHR corresponding to the first PUSCH, and the PHR is an actual PHR and comprises a PH and a P_{Cmax} on a component carrier where the PHR is located, wherein the PHR is determined based on a corresponding actually transmitted PUSCH.

29. The method according to claim 22, wherein each PUSCH among the plurality of PUSCHs is not transmitted on a slot overlapping with a slot n, the slot n is a first slot of a PUSCH carrying the second information, and the slot n serves as a slot for reporting the PHR; and
the second information comprises the PHR corresponding to each PUSCH, each PHR is a virtual PHR, and each PHR comprises a PH, or each PHR comprises a PH and a P_{Cmax} on a component carrier where the PHR is located, wherein the PHR is determined based on a corresponding reference PUSCH.

30. The method according to claim 29, wherein:
a first PHR comprised in the second information is a PHR of a PUSCH corresponding to a first TCI state, and a second PHR comprised in the second information is a PHR of a PUSCH corresponding to a second TCI state; or
a first PHR comprised in the second information is a PHR of a PUSCH corresponding to a first CORESETPoolIndex, and a second PHR comprised in the second information is a PHR of a PUSCH corresponding to a second CORESETPoolIndex; or
a first PHR comprised in the second information is a PHR of a PUSCH corresponding to a first SRS resource set, and a second PHR comprised in the second information is a PHR of a PUSCH corresponding to a second SRS resource set, wherein an index of the first SRS resource set is smaller than an index of the second SRS resource set.

31. The method according to claim 22, wherein each PUSCH among the plurality of PUSCHs is not transmitted on a slot overlapping with a slot n, the slot n is a first slot of a PUSCH carrying the second information, and the slot n serves as a slot for reporting the PHR;
the second information comprises one PHR, the PHR is a virtual PHR, and the PHR comprises a PH, or the PHR comprises a PH and a P_{Cmax} on a component carrier where the PHR is located, wherein the PH is determined based on a corresponding reference PUSCH; and
wherein the PHR is a PHR of a PUSCH corresponding to a first TCI state, or the PHR is a PHR of a PUSCH corresponding to a first CORESETPoolIndex, or the PHR is a PHR of a PUSCH corresponding to an SRS resource set with a smaller index among two SRS resource sets.

32. The method according to any one of claims 19 to 31, further comprising:
receiving fourth information sent by the terminal, the fourth information indicating that the terminal has a terminal capability of supporting PHR enhanced calculation.

33. The method according to claim 32, wherein the PHR enhanced calculation comprises:
a first PUSCH among the plurality of PUSCHs is actually transmitted on a slot overlapping with a slot n, a second PUSCH among the plurality of PUSCHs is not transmitted on the slot overlapping with the slot n, the slot n is a first slot of a PUSCH carrying the second information, and the slot n serves as a slot for reporting the PHR; and
a PH and a P_{Cmax} on a component carrier where the PHR is located, in the PHR corresponding to the second PUSCH, are determined based on at least part of transmission parameters of the first PUSCH and/or by taking into account a non-ideal maximum power reduction (MPR) parameter corresponding to the second PUSCH.

34. The method according to claim 32, wherein the PHR enhanced calculation comprises:
each PUSCH among the plurality of PUSCHs is not transmitted on a slot overlapping with a slot n, the slot n is a first slot of a PUSCH carrying the second information, and the slot n serves as a slot for reporting the PHR; and
a PH and a P_{Cmax} on a component carrier where the PHR is located, in the PHR corresponding to each PUSCH, are determined based on at least part of transmission parameters of a first PUSCH and/or by taking into account a non-ideal MPR parameter corresponding to the first PUSCH.

35. The method according to any one of claims 19 to 34, further comprising:
receiving first information sent by the network device, the first information being used for configuring a mode of sending the PHR by the terminal as a multi-PHR mode.

36. The method according to any one of claims 19 to 35, wherein the plurality of PUSCHs are transmitted based on multi-downlink control information (DCI).

37. An uplink communication method, comprising:
sending, by a network device, first information to a terminal, the first information being used for configuring a mode of sending a power headroom report (PHR) by the terminal as a multi-PHR mode; and
sending, by the terminal, second information to the network device, the second information comprising a PHR corresponding to at least one physical uplink shared channel (PUSCH) among a plurality of PUSCHs,
wherein the plurality of PUSCHs are based on simultaneous transmission from multi-panel (STxMP), and each PUSCH is associated with a different transmission and reception point (TRP), or each PUSCH is associated with a different transmission configuration indication (TCI) state, or each PUSCH is associated with a different control resource set pool index (CORESETPoolIndex), or each PUSCH is associated with a different sounding reference signal (SRS) resource set.

38. A terminal, comprising:
a transceiver unit configured to send second information to a network device, the second information comprising a power headroom report (PHR) corresponding to at least one physical uplink shared channel (PUSCH) among a plurality of PUSCHs,
wherein the plurality of PUSCHs are based on simultaneous transmission from multi-panel (STxMP), and each PUSCH is associated with a different transmission and reception point (TRP), or each PUSCH is associated with a different transmission configuration indication (TCI) state, or each PUSCH is associated with a different control resource set pool index (CORESETPoolIndex), or each PUSCH is associated with a different sounding reference signal (SRS) resource set.

39. A network device, comprising:
a transceiver unit configured to receive second information sent by a terminal, the second information comprising a power headroom report (PHR) corresponding to at least one physical uplink shared channel (PUSCH) among a plurality of PUSCHs,
wherein the plurality of PUSCHs are based on simultaneous transmission from multi-panel (STxMP), and each PUSCH is associated with a different transmission and reception point (TRP), or each PUSCH is associated with a different transmission configuration indication (TCI) state, or each PUSCH is associated with a different control resource set pool index (CORESETPoolIndex), or each PUSCH is associated with a different sounding reference signal (SRS) resource set.

40. A terminal, comprising:
one or more processors;
wherein the terminal is configured to perform the uplink communication method according to any one of claims 1 to 18.

41. A network device, comprising:
one or more processors;
wherein the network device is configured to perform the uplink communication method according to any one of claims 19 to 36.

42. A communication system, comprising a terminal and a network device, wherein the terminal is configured to perform the uplink communication method according to any one of claims 1 to 18, and the network device is configured to perform the uplink communication method according to any one of claims 19 to 36.

43. A storage medium storing instructions that, when executed by a communication device, cause the communication device to perform the uplink communication method according to any one of claims 1 to 18 or 19 to 36.
